# EUROPEAN PATENT SPECIFICATION

(11) **EP 3 846 543 B1**
(45) Date of publication and mention of the grant of the patent: **07.10.2026**
(21) Application number: 19865129.1
(22) Date of filing: 28.08.2019
(51) Int. Cl.: H04L 41/0894, H04W 24/02, H04W 48/12, B64U 10/13, H04W 4/06, H04W 4/44, H04W 12/40, H04W 8/16, G05D 1/00, H04W 12/63

(54) **METHOD AND DEVICE FOR SUPERVISING UNMANNED AERIAL VEHICLE**
VERFAHREN UND VORRICHTUNG ZUR ÜBERWACHUNG EINES UNBEMANNTEN LUFTFAHRZEUGS
PROCÉDÉ ET DISPOSITIF DE SUPERVISION DE VÉHICULE AÉRIEN SANS PILOTE

(30) Priority: 29.09.2018 CN 201811150263
(43) Date of publication of application: 07.07.2021
(73) Proprietor: HUAWEI TECHNOLOGIES CO., LTD., Shenzhen, Guangdong 518129 (CN)
(72) Inventor: ZHU, Haoren, Shenzhen, Guangdong 518129 (CN); JIN, Weisheng, Shenzhen, Guangdong 518129 (CN)
(74) Representative: MERH-IP Matias Erny Reichl Hoffmann Patentanwälte PartG mbB
(86) International application number: PCT/CN2019/102967
(87) International publication number: WO 2020/063239

(56) References cited:
- EP-A1- 3 792 726
- WO-A1-2017/149160
- WO-A1-2018/098775
- CN-A- 104 950 907
- CN-A- 106 970 640
- CN-A- 108 401 477
- CN-A- 109 451 811
- CN-U- 207 249 886
- US-A1- 2017 025 021
- US-A1- 2017 337 219
- US-A1- 2020 302 799
- "3rd Generation Partnership Project; Technical Specification Group Services and System Aspects; Remote Identification of Unmanned Aerial Systems; Stage 1 (Release 16)", 15 May 2018 (2018-05-15), XP051534136, Retrieved from the Internet <URL:http://www.3gpp.org/ftp/tsg%5Fsa/WG1%5FServ/TSGS1%5F82%5FDubrovnik/docs/S1%2D181302%2Ezip> [retrieved on 20180515]

## Description

### TECHNICAL FIELD

This application relates to the field of communications technologies, and in particular, to an unmanned aerial vehicle supervision method and a device.

### BACKGROUND

An unmanned aerial vehicle (unmanned aerial vehicle, UAV), UAV for short, is an unmanned flight vehicle operated by using a radio remote control device and a self-provided program control apparatus. Unmanned aerial vehicles feature advantages such as informatization, automation, and zero risk of casualties, and therefore are widely used in many fields, such as emergency rescue, environment detection, power line inspection, aerial surveying and mapping, agricultural plant protection, and military affairs.

However, if there is a lack of corresponding supervision methods for unmanned aerial vehicles widely used, an unmanned aerial vehicle may easily enter a restricted area, affecting national security, affecting proper flight of a civil aviation aircraft, and causing loss of life and property of ground personnel.

With an increase in types of unmanned aerial vehicles and expansion in flight areas of unmanned aerial vehicles, there is an urgent need for a method for implementing extensive and unified supervision on more types of unmanned aerial vehicles in a larger space range.

Document WO 2018/098775 A1 generally discloses a method for controlling flight of a UAV comprising: obtaining information about a location of an object of interest; calculating, during operation of the UAV, a flight-restricted distance for the UAV to maintain relative to the object of interest, wherein the flight-restricted distance is calculated based on a safety factor, wherein the safety factor is determined based on an object classification; and controlling flight of the UAV to maintain the flight-restricted distance relative to the object of interest.

Document US 2017/025021 A1 generally discloses a drone control apparatus including a communication unit that communicates with a drone operation system and a drone over a wireless communication network, a storage unit that stores radio wave environment information of the wireless communication network according to a spatial position, and flight restriction information, and a determination unit that determines a flight path and a flight altitude of the drone based on a radio map, the flight restriction information, and a departure and a destination of the drone received from the drone operation system, and transmits the flight path and the flight altitude to at least one of the drone and the drone operation system via the communication unit.

Document "3rd Generation Partnership Project; Technical Specification Group Services and System Aspects; Remote Identification of Unmanned Aerial Systems; Stage 1 (Release 16)", 3GPP DRAFT; S1-181302 FS_ID_UAS TR V0.1.0-CLEAN, 15 May 2018 generally discusses use cases and potential requirements for meeting the business, security, and public safety needs for the remote identification and tracking of UAS linked to a 3GPP subscription.

Document WO 2017/149160 A1 generally discloses a Very Low Level Operations Coordination Platform comprising a cloud-based software platform that serves as a central database application for drone-related applications, the central database application comprising a database storing any, some or all zones which defines where drones are and are not allowed to fly based on all required information such as but not limited to drone legislation, airspace structure, obstacles, environment and people density, taking into account scheduled flights, planned flights and flights flown of other drones, wherein if the drone fails to remain within the approved fly zone the platform is adapted to proactively intervene in flight operations so that the drone cannot leave the approved fly zone.

Document EP 3 792 726 A1 generally discloses a UAV control method including receiving an access message from a UAV, the access message including a type identifier of the UAV; acquiring target supervision strategy information based on the access message, the target supervision strategy information indicating a flight criterion of the UAV; and sending a control instruction to the UAV based on the target supervision strategy information, the UAV being configured to control flight based on the control instruction.

### SUMMARY

Embodiments of this application provide an unmanned aerial vehicle supervision method and a device, to resolve a problem that extensive supervision on an unmanned aerial vehicle cannot be implemented in the conventional technology. In particular, there are provided unmanned aerial vehicle supervision methods, an unmanned aerial vehicle supervision system, a computer-readable storage medium, an unmanned aerial vehicle and an access network device, having the features of respective independent claims. The embodiments are defined in the dependent claims.

A first example of this application not encompassed by the claims provides an unmanned aerial vehicle supervision method. The method includes: A core network element obtains a first broadcast request, where the first broadcast request includes first management and control information and second management and control information that are used to manage and control an unmanned aerial vehicle, and the second management and control information includes first area information; the core network element determines a target management network element based on the first area information or second area information, where the second area information corresponds to the first area information; and the core network element sends a second broadcast request to the target management network element, where the second broadcast request includes third management and control information and fourth management and control information, the fourth management and control information includes the second area information, and the third management and control information corresponds to the first management and control information. The target management network element may also be a core network element, for example, an access and mobility management function (access and mobility management function, AMF) network element. The first management and control information and the second management and control information may also be collectively referred to as management and control information, and the management and control information includes all content of the first management and control information and the second management and control information. It can be learned from the foregoing first example, that in this application, the unmanned aerial vehicle may be supervised in a broadcast manner, so that extensive and unified supervision on more types of unmanned aerial vehicles in a larger space range is implemented. This reduces difficulty in supervision on the unmanned aerial vehicles.

In a possible implementation, with reference to the first example, in a first possible implementation of the first example, the second area information is the same as the first area information. If the second area information is the same as the first area information, the core network element does not need to perform area information conversion, so that the core network element may quickly send the second broadcast request.

In a possible implementation, with reference to the first example, in a second possible implementation of the first example, the core network element determines the second area information based on the first area information, where the second area information is different from the first area information, and the second area information is different from the first area information. In this case, the core network element performs area information conversion, so that an access network device may quickly identify the second area information.

In a possible implementation, with reference to the first example, or the first or the second possible implementation of the first example, in a third possible implementation of the first example, the second area information includes information about a managed and controlled cell or a tracking area identifier list.

In a possible implementation, with reference to the first example or the first or the second possible implementation of the first example, in a fourth possible implementation of the first example, that the core network element determines a target management network element based on the first area information or second area information includes: The core network element determines, based on the first area information, a target management network element corresponding to the first area information; or the core network element determines, based on the second area information, a target management network element corresponding to the second area information.

In a possible implementation, with reference to the first example, or the first to the fourth possible implementations of the first example, in a fifth possible implementation of the first example, the third management and control information includes a configuration policy of access restriction, and the configuration policy is used to indicate attribute information of an area in which access of the unmanned aerial vehicle is restricted. A form of the configuration policy of access restriction is used, to indicate the area in which the access of the unmanned aerial vehicle is restricted. This increases diversity of UAV management and control indications.

In a possible implementation, with reference to the fifth possible implementation of the first example, in a sixth possible implementation of the first example, the method further includes: The core network element determines cell access restriction information based on the configuration policy, where the cell access restriction information is used to indicate a cell in which access of the unmanned aerial vehicle is restricted. A form of the cell access restriction information is used, to indicate the cell in which the access of the unmanned aerial vehicle is restricted. This increases diversity of UAV management and control indications.

In a possible implementation, with reference to the first example, or the first to the sixth possible implementations of the first example, in a seventh possible implementation of the first example, the second area information is used to indicate an area in which the unmanned aerial vehicle is managed and controlled; and the third management and control information includes an operation instruction, where the operation instruction is used to indicate an operation that needs to be performed by the unmanned aerial vehicle.

In a possible implementation, with reference to the seventh possible implementation of the first example, in an eighth possible implementation of the first example, the third management and control information further includes a management and control type, management and control time information, or alarm information, where the management and control type is used to indicate a reason for performing management and control on the unmanned aerial vehicle; the management and control time information is used to indicate a time period in which the unmanned aerial vehicle is managed and controlled; and the alarm information is used to indicate content of an alert or a warning. It can be learned from the eighth possible implementation that rich content is included in the third management and control information, and management and control indication may be performed in a plurality of examples.

A second example of this application not encompassed by the claims provides an unmanned aerial vehicle supervision method. The method includes: An access network device receives a second broadcast request sent by a core network element, where the second broadcast request includes third management and control information and fourth management and control information that are used to manage and control an unmanned aerial vehicle, and the fourth management and control information includes second area information; the access network device determines, based on the second area information, a target area for broadcasting; and the access network device broadcasts the third management and control information to an unmanned aerial vehicle in the target area, where the third management and control information is used to indicate the unmanned aerial vehicle to perform a corresponding operation. It can be learned from the foregoing second example, that in this application, the unmanned aerial vehicle may be supervised in a broadcast manner, so that extensive and unified supervision on more types of unmanned aerial vehicles in a larger space range is implemented. This reduces difficulty in supervision on the unmanned aerial vehicles.

In a possible implementation, with reference to the second example, in a first possible implementation of the second example, that the access network device broadcasts the third management and control information to an unmanned aerial vehicle in the target area includes: The access network device broadcasts a system message to the unmanned aerial vehicle in the target area, where the system message includes the third management and control information.

In a possible implementation, with reference to the first possible implementation of the second example, in a second possible implementation of the second example, the method further includes: The access network device broadcasts a paging message to the unmanned aerial vehicle in the target area, where the paging message includes indication information, and the indication information is used to indicate the unmanned aerial vehicle to obtain the third management and control information.

In a possible implementation, with reference to the second example, in a third possible implementation of the second example, that the access network device broadcasts the third management and control information to an unmanned aerial vehicle in the target area includes: The access network device broadcasts a system message to the unmanned aerial vehicle in the target area, where the system message includes the third management and control information and indication information, and the indication information is used to indicate the unmanned aerial vehicle to obtain the third management and control information.

In a possible implementation, with reference to the second example, in a fourth possible implementation of the second example, that the access network device broadcasts the third management and control information to an unmanned aerial vehicle in the target area includes: The access network device broadcasts a paging message to the unmanned aerial vehicle in the target area, where the paging message includes the third management and control information and indication information, and the indication information is used to indicate the unmanned aerial vehicle to obtain the third management and control information.

In a possible implementation, with reference to any one of the first to the third possible implementations of the second example, in a fifth possible implementation of the second example, the method further includes: The access network device encapsulates the third management and control information in system information blocks of the system message.

In a possible implementation, with reference to the fifth possible implementation of the second example, in a sixth possible implementation of the second example, the system information blocks include a first system information block and a second system information block; the first system information block includes scheduling information of the third management and control information; and the second system information block includes the third management and control information.

In a possible implementation, with reference to the fifth possible implementation of the second example, in a seventh possible implementation of the second example, the system information blocks include a first system information block and a second system information block; the first system information block includes scheduling information in the second system information block; and the first system information block includes the third management and control information.

In a possible implementation, with reference to any one of the second example, or the first to the seventh possible implementations of the second example, in an eighth possible implementation of the second example, the third management and control information includes a configuration policy of access restriction, and the configuration policy is used to indicate attribute information of an area in which access of the unmanned aerial vehicle is restricted.

In a possible implementation, with reference to the eighth possible implementation of the second example, in a ninth possible implementation of the second example, the method further includes: The access network device determines cell access restriction information based on the configuration policy, where the cell access restriction information is used to indicate a cell in which access of the unmanned aerial vehicle is restricted. A form of a configuration policy of access restriction is used, to indicate the area in which the access of the unmanned aerial vehicle is restricted. This increases diversity of UAV management and control indications.

In a possible implementation, with reference to the second example, in a tenth possible implementation of the second example, that the access network device determines, based on the second area information, a target area for broadcasting includes: The access network device determines, based on the second area information, a cell for broadcasting.

In a possible implementation, with reference to any one of the second example, or the first to the seventh possible implementations of the second example, in an eleventh possible implementation of the second example, the second area information is used to indicate an area in which the unmanned aerial vehicle is managed and controlled; and
the third management and control information includes an operation instruction, and the operation instruction is used to indicate an operation that needs to be performed by the unmanned aerial vehicle.

In a possible implementation, with reference to the eleventh possible implementation of the second example, in a twelfth possible implementation of the second example, the third management and control information further includes a management and control type, management and control time information, or alarm information, where the management and control type is used to indicate a reason for performing management and control on the unmanned aerial vehicle; the management and control time period information is used to indicate a time period in which the unmanned aerial vehicle is managed and controlled; and the alarm information is used to indicate content of an alert or a warning. It can be learned from this possible implementation that rich content is included in the third management and control information, and management and control indication may be performed in a plurality of examples.

A third example of this application not encompassed by the claims provides an unmanned aerial vehicle supervision method. The method includes: An unmanned aerial vehicle receives third management and control information broadcasted from an access network device; and the unmanned aerial vehicle performs a corresponding operation based on the third management and control information.

In a possible implementation, with reference to the third example, in a first possible implementation of the third example, that an unmanned aerial vehicle receives third management and control information broadcasted from an access network device includes: The unmanned aerial vehicle receives a system message broadcasted from the access network device, where the system message includes the third management and control information. Correspondingly, the method further includes: The unmanned aerial vehicle obtains the third management and control information from the system message. In this application, the unmanned aerial vehicle may be supervised in a broadcast manner, so that extensive and unified supervision on more types of unmanned aerial vehicles in a larger space range is implemented. This reduces difficulty in supervision on the unmanned aerial vehicles.

In a possible implementation, with reference to the first possible implementation of the third example, in a second possible implementation of the third example, the method further includes: The unmanned aerial vehicle receives a paging message broadcasted from the access network device, where the paging message includes indication information; and that the unmanned aerial vehicle obtains the third management and control information from the system message includes: The unmanned aerial vehicle obtains the third management and control information from the system message based on the indication information.

In a possible implementation, with reference to the third example, in a third possible implementation of the third example, that an unmanned aerial vehicle receives third management and control information broadcasted from an access network device includes: The unmanned aerial vehicle receives a system message broadcasted from the access network device, where the system message includes the third management and control information and indication information, and the indication information is used to indicate the unmanned aerial vehicle to obtain the third management and control information. Correspondingly, the method further includes: The unmanned aerial vehicle obtains the third management and control information from the system message based on the indication information.

In a possible implementation, with reference to the third example, in a fourth possible implementation of the third example, that an unmanned aerial vehicle receives third management and control information broadcasted from an access network device includes: The unmanned aerial vehicle receives a paging message broadcasted from the access network device, where the paging message includes the third management and control information and indication information, and the indication information is used to indicate the unmanned aerial vehicle to obtain the third management and control information. Correspondingly, the method further includes: The unmanned aerial vehicle obtains the third management and control information from the paging message based on the indication information.

In a possible implementation, with reference to any one of the first to the third possible implementations of the third example, in a fifth possible implementation of the third example, the system message includes a first system information block and a second system information block; the first system information block includes scheduling information in the second system information block; the first system information block includes scheduling information of the third management and control information; and the second system information block includes the third management and control information.

In a possible implementation, with reference to any one of the third example, or the first to the fourth possible implementations of the third example, in a sixth possible implementation of the third example, the third management and control information includes a configuration policy of access restriction, and the configuration policy is used to indicate attribute information of an area in which access of the unmanned aerial vehicle is restricted; and the unmanned aerial vehicle determines a candidate cell based on the configuration policy during cell handover or cell reselection. During cell handover or cell reselection, a cell in which access of the unmanned aerial vehicle is restricted is not selected. This improves efficiency of the cell handover or cell reselection.

In a possible implementation, with reference to any one of the third example, or the first to the fourth possible implementations of the third example, in a seventh possible implementation of the third example, the third management and control information includes an operation instruction; and that the unmanned aerial vehicle performs a corresponding operation based on the third management and control information includes: The unmanned aerial vehicle performs the corresponding operation according to the operation instruction, where the operation instruction includes hovering, landing, or returning.

A fourth example of this application not encompassed by the claims provides a core network element, including: a receiving unit, configured to receive a first broadcast request, where the first broadcast request includes first management and control information and second management and control information that are used to manage and control an unmanned aerial vehicle, and the second management and control information includes first area information; a processing unit, configured to determine a target management network element based on the first area information obtained by the receiving unit or second area information received by the receiving unit, where the second area information corresponds to the first area information; and a sending unit, configured to send a second broadcast request to the target management network element determined by the determining unit, where the second broadcast request includes third management and control information and fourth management and control information, the fourth management and control information includes the second area information, and the third management and control information corresponds to the first management and control information. When the core network element itself generates the first broadcast request, the first broadcast request is generated by the processing unit. In this application, the unmanned aerial vehicle may be supervised in a broadcast manner, so that extensive and unified supervision on more types of unmanned aerial vehicles in a larger space range is implemented. This reduces difficulty in supervision on the unmanned aerial vehicles.

In a possible implementation, with reference to the fourth example, in a first possible implementation of the fourth example, the determining unit is further configured to determine the second area information based on the first area information, where the second information is different from the first area information.

In a possible implementation, with reference to the fourth example or the first possible implementation of the fourth example, in a second possible implementation of the fourth example, the determining unit is configured to: determine, based on the first area information, a target management network element corresponding to the first area information; or determine, based on the second area information, a target management network element corresponding to the second area information.

In a possible implementation, with reference to the fourth example or the first possible implementation of the fourth example, in a third possible implementation of the fourth example, the determining unit is further configured to: when the third management and control information includes a configuration policy of access restriction, determine cell access restriction information based on the configuration policy, where the cell access restriction information is used to indicate a cell in which access of the unmanned aerial vehicle is restricted, and the configuration policy is used to indicate attribute information of an area in which access of the unmanned aerial vehicle is restricted.

A fifth example of this application not encompassed by the claims provides an access network device, including: a receiving unit, configured to receive a second broadcast request sent by a core network element, where the second broadcast request includes third management and control information and fourth management and control information that are used to manage and control an unmanned aerial vehicle, and the fourth management and control information includes second area information; a processing unit, configured to determine, based on the second area information received by the receiving unit, a target area for broadcasting; and a sending unit, configured to broadcast the third management and control information to an unmanned aerial vehicle in the target area determined by the determining unit, where the third management and control information is used to indicate the unmanned aerial vehicle to perform a corresponding operation. In this application, the unmanned aerial vehicle may be supervised in a broadcast manner, so that extensive and unified supervision on more types of unmanned aerial vehicles in a larger space range is implemented. This reduces difficulty in supervision on the unmanned aerial vehicles.

In a possible implementation, with reference to the fifth example, in a first possible implementation of the fifth example, the sending unit is configured to broadcast a system message to the unmanned aerial vehicle in the target area, where the system message includes the third management and control information.

In a possible implementation, with reference to the first possible implementation of the fifth example, in a second possible implementation of the fifth example, the sending unit is further configured to broadcast a paging message to the unmanned aerial vehicle in the target area, where the paging message includes indication information, and the indication information is used to indicate the unmanned aerial vehicle to obtain the third management and control information.

In a possible implementation, with reference to the fifth example, in a third possible implementation of the fifth example, the sending unit is configured to broadcast a system message to the unmanned aerial vehicle in the target area, where the system message includes the third management and control information and indication information, and the indication information is used to indicate the unmanned aerial vehicle to obtain the third management and control information.

In a possible implementation, with reference to the fifth example, in a fourth possible implementation of the fifth example, the sending unit is configured to broadcast a paging message to the unmanned aerial vehicle in the target area, where the paging message includes the third management and control information and indication information, and the indication information is used to indicate the unmanned aerial vehicle to obtain the third management and control information.

In a possible implementation, with reference to any one of the first to the third possible implementations of the fifth example, in a fifth possible implementation of the fifth example, the processing unit is further configured to encapsulate the third management and control information in a system information block of the system message.

In a possible implementation, with reference to any one of the fifth example, or the first to the fourth possible implementations of the fifth example, in a sixth possible implementation of the fifth example, the processing unit is further configured to: when the third management and control information includes a configuration policy of access restriction, determine cell access restriction information based on the configuration policy, where the cell access restriction information is used to indicate a cell in which access of the unmanned aerial vehicle is restricted, and the configuration policy is used to indicate attribute information of an area in which access of the unmanned aerial vehicle is restricted.

In a possible implementation, with reference to the fifth example, in a seventh possible implementation of the fifth example, the processing unit is configured to determine, based on the second area information, a cell for broadcasting.

A sixth example of this application not encompassed by the claims provides an unmanned aerial vehicle, including: a receiving unit, configured to receive third management and control information broadcasted from an access network device; and a processing unit, configured to perform a corresponding operation based on the third management and control information received by the receiving unit. In this application, the unmanned aerial vehicle may be supervised in a broadcast manner, so that extensive and unified supervision on more types of unmanned aerial vehicles in a larger space range is implemented. This reduces difficulty in supervision on the unmanned aerial vehicles.

In a possible implementation, with reference to the sixth example, in a first possible implementation of the sixth example, the receiving unit is configured to receive a system message broadcasted from the access network device, where the system message includes the third management and control information; and the processing unit is configured to obtain the third management and control information from the system message received by the receiving unit.

In a possible implementation, with reference to the first possible implementation of the sixth example, in a second possible implementation of the sixth example, the receiving unit is further configured to receive a paging message broadcasted from the access network device, where the paging message includes indication information; and the processing unit is configured to obtain the third management and control information from the system message based on the indication information.

In a possible implementation, with reference to the sixth example, in a third possible implementation of the sixth example, the receiving unit is configured to receive a system message broadcasted from the access network device, where the system message includes the third management and control information and indication information, and the indication information is used to indicate the unmanned aerial vehicle to obtain the third management and control information; and the processing unit is configured to obtain the third management and control information from the system message based on the indication information received by the receiving unit.

In a possible implementation, with reference to the sixth example, in a fourth possible implementation of the sixth example, the receiving unit is configured to receive a paging message broadcasted from the access network device, where the paging message includes the third management and control information and indication information, and the indication information is used to indicate the unmanned aerial vehicle to obtain the third management and control information; and the processing unit is configured to obtain the third management and control information from the paging message based on the indication information received by the receiving unit.

In a possible implementation, with reference to any one of the sixth example, or the first to the fourth possible implementations of the sixth example, in a fifth possible implementation of the sixth example, the processing unit is further configured to: during cell handover or cell reselection, determine a candidate cell based on a configuration policy included in the third management and control information, where the configuration policy is used to indicate attribute information of an area in which access of the unmanned aerial vehicle is restricted.

In a possible implementation, with reference to any one of the sixth example, or the first to the fourth possible implementations of the sixth example, in a sixth possible implementation of the sixth example, the processing unit is configured to: when the third management and control information includes an operation instruction, perform a corresponding operation according to the operation instruction, where the operation instruction includes hovering, landing, or returning.

A seventh example of this application not encompassed by the claims provides a core network element, including at least one processor, a memory, a communications line, a transceiver, and a computer-executable instruction that is stored in the memory and that can be run on the processor. When the computer-executable instruction is executed by the processor, the processor performs the method according to any one of the first example or the possible implementations of the first example.

An eighth example of this application not encompassed by the claims provides an access network device, including at least one processor, a memory, a communications line, a transceiver, and a computer-executable instruction that is stored in the memory and that can be run on the processor. When the computer-executable instruction is executed by the processor, the processor performs the method according to any one of the second example or the possible implementations of the second example.

A ninth example of this application not encompassed by the claims provides an unmanned aerial vehicle, including at least one processor, a memory, a communications line, a transceiver, and a computer-executable instruction that is stored in the memory and that can be run on the processor. When the computer-executable instruction is executed by the processor, the processor performs the method according to any one of the third example or the possible implementations of the third example.

A tenth example of this application not encompassed by the claims provides a computer-readable storage medium storing one or more computer-executable instructions, where when the computer-executable instructions are executed by a processor, the processor performs the method according to any one of the first example or the possible implementations of the first example.

An eleventh example of this application not encompassed by the claims provides a computer-readable storage medium storing one or more computer-executable instructions, where when the computer-executable instructions are executed by a processor, the processor performs the method according to any one of the second example or the possible implementations of the second example.

A twelfth example of this application not encompassed by the claims provides a computer-readable storage medium storing one or more computer-executable instructions, where when the computer-executable instructions are executed by a processor, the processor performs the method according to any one of the third example or the possible implementations of the third example.

A thirteenth example of this application not encompassed by the claims provides a computer program product storing one or more computer-executable instructions, where when the computer-executable instructions are executed by a processor, the processor performs the method according to any one of the first example or the possible implementations of the first example.

A fourteenth example of this application not encompassed by the claims provides a computer program product storing one or more computer-executable instructions, where when the computer-executable instructions are executed by a processor, the processor performs the method according to any one of the second example or the possible implementations of the second example.

A fifteenth example of this application not encompassed by the claims provides a computer program product storing one or more computer-executable instructions, where when the computer-executable instructions are executed by a processor, the processor performs the method according to any one of the third example or the possible implementations of the third example.

A sixteenth example of this application not encompassed by the claims provides a chip system. The chip system includes a processor, configured to support a core network element in implementing a function in any one of the first example or the possible implementations of the first example. In a possible design, the chip system further includes a memory. The memory is configured to store a program instruction and data that are necessary for an executive function network element. The chip system may include a chip, or may include a chip and another discrete device.

A seventeenth example of this application not encompassed by the claims provides a chip system. The chip system includes a processor, configured to support an access network device in implementing a function in any one of the second example or the possible implementations of the second example. In a possible design, the chip system further includes a memory. The memory is configured to store a program instruction and data that are necessary for an executive function network element. The chip system may include a chip, or may include a chip and another discrete device.

An eighteenth example of this application not encompassed by the claims provides a chip system. The chip system includes a processor, configured to support an access network device in implementing a function in any one of the third example or the possible implementations of the third example. In a possible design, the chip system further includes a memory. The memory is configured to store a program instruction and data that are necessary for an executive function network element. The chip system may include a chip, or may include a chip and another discrete device.

For technical effects brought by any implementation in the fourth example, seventh example, tenth example, thirteenth example, and sixteenth example, refer to the technical effects brought by different implementations in the first example. Details are not described herein again.

For technical effects brought by any implementation in the fifth example, eighth example, eleventh example, fourteenth example, and seventeenth example, refer to the technical effects brought by different implementations in the second example. Details are not described herein again.

For technical effects brought by any implementation in the sixth example, ninth example, twelfth example, fifteenth example, and eighteenth example, refer to technical effects brought by different implementations in the third example. Details are not described herein again.

A nineteenth example of this application not encompassed by the claims provides an unmanned aerial vehicle supervision system, where the system includes:
a core network element, configured to perform the method according to any one of the first example or the possible implementations of the first example;
an access network device, configured to perform the method according to any one of the second example or the possible implementations of the second example; and
an unmanned aerial vehicle, configured to perform the method according to any one of the third example or the possible implementations of the third example.

### BRIEF DESCRIPTION OF DRAWINGS

FIG. 1 is a schematic diagram of a network architecture according to this application;
FIG. 2 is a schematic diagram of another network architecture according to this application;
FIG. 3 is a schematic diagram of another network architecture according to this application;
FIG. 4 is a schematic diagram of another network architecture according to this application;
FIG. 5 is a schematic diagram of an embodiment of an unmanned aerial vehicle supervision system according to this application;
FIG. 6 is a schematic diagram of an embodiment of an unmanned aerial vehicle supervision method according to this application;
FIG. 7 is a schematic diagram of another embodiment of an unmanned aerial vehicle supervision method according to this application;
FIG. 8 to FIG. 10 are schematic diagrams of three possible scenarios in which an unmanned aerial vehicle system accesses a mobile network;
FIG. 11 is a schematic diagram of a network architecture for unmanned aerial vehicle supervision according to this application;
FIG. 12A and FIG. 12B are a schematic diagram of another embodiment of an unmanned aerial vehicle supervision method according to this application;
FIG. 13 is a schematic diagram of a network architecture for unmanned aerial vehicle supervision according to this application;
FIG. 14 is a schematic diagram of another embodiment of an unmanned aerial vehicle supervision method according to this application;
FIG. 15 is a schematic diagram of an embodiment of a communications device according to this application;
FIG. 16 is a schematic diagram of an embodiment of a core network element according to this application;
FIG. 17 is a schematic diagram of an embodiment of an access network device according to this application; and
FIG. 18 is a schematic diagram of an embodiment of an unmanned aerial vehicle according to this application.

### DESCRIPTION OF EMBODIMENTS

In the specification, claims, and accompanying drawings of this application, terms "first", "second", "third", "fourth", and so on are intended to distinguish between similar objects but do not necessarily indicate a specific order or sequence. It should be understood that the terms used in such a way are interchangeable in proper circumstances, and this is merely a discrimination manner for describing objects having a same attribute in embodiments of this application. In addition, terms "include", "have" and any other variants mean to cover a non-exclusive inclusion, so that a process, method, system, product, or device that includes a series of units is not necessarily limited to those units, but may include other units not expressly listed or inherent to the process, method, product, or device.

As the unmanned aerial vehicle technology becomes mature, application of unmanned aerial vehicles has gradually pervaded from the military application field to the civil field. However, if there is no comprehensive supervision measure, and civil unmanned aerial vehicles are allowed to fly disorderly, there will be a great threat to public security. The existing unmanned aerial vehicle supervision method requires to deploy a dedicated supervision device, which is costly and limited in coverage.

Networks such as a 4th generation (4th generation, 4G) network and a 5th generation (5th generation, 5G) network may be referred to as mobile networks. From a perspective of a service, the mobile network may include a radio access network (radio access network, RAN) and a core network (core network, CN). The RAN may be connected to the CN. The RAN is responsible for user access, and the CN is responsible for service processing. The RAN includes but is not limited to a base station.

A device form of the RAN in the 4G network or 5G network may be slightly different, but a device responsible for communicating with a terminal has a broadcast capability, for example, an evolved NodeB (eNodeB) in the 4G network or a RAN device in the 5G network. In this application, devices that have a broadcast capability in a radio access network are collectively referred to as access network devices.

Usually, the core network also has a network element that supports a broadcast function. For example, the 5G network includes a cell broadcast center function (cell broadcast centre function, CBCF) network element or a network element integrated with a CBCF function. In this application, an independently disposed CBCF network element or a network element integrated with a CBCF is referred to as a core network element.

Currently, mobile networks are widely deployed, and are applicable to unmanned aerial vehicles from different vendors. Therefore, this application provides an unmanned aerial vehicle supervision method by using a current RAN having a broadcast function and device that has a broadcast function and that is in a CN, to supervise an unmanned aerial vehicle in a broadcast manner. The unmanned aerial vehicle supervision method provided in this application may be applied to the 5G network and the 4G network. The following first separately describes, with reference to the accompanying drawings, a 5G network structure and a 4G network structure that are applicable to this application.

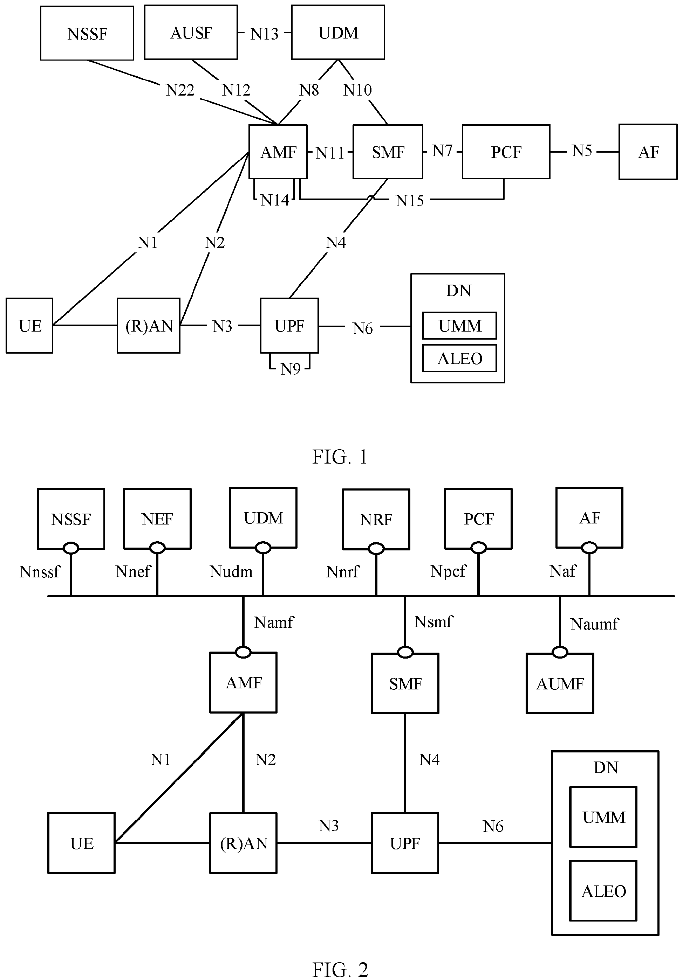

FIG. 1 is a schematic diagram of a network architecture for a 5G network according to this application. FFIG. 2is a schematic diagram of another network architecture for a 5G network represented by using server interfaces. User equipment (user equipment, UE), a (radio) access network ((radio) access network, (R)AN), a user plane function (user plane function, UPF) network element, and a data network (data network, DN) in each of FIG. 1 and FIG. 2are generally referred to as user plane network functions or entities, and data traffic of a user may be transmitted through a data transmission channel established between the UE and the DN.

The UE may include: a handheld terminal, a notebook computer, a subscriber unit (subscriber unit), a cellular phone (cellular phone), a smartphone (smart phone), a wireless data card, a personal digital assistant (personal digital assistant, PDA) computer, a tablet computer, a wireless modem (modem), a handheld device (handheld), a laptop computer (laptop computer), a cordless phone (cordless phone) or a wireless local loop (wireless local loop, WLL) station, a machine type communication (machine type communication, MTC) terminal, or another device that can access a network. The UE and an access network device communicate with each other by using an air interface technology.

The RAN device is mainly responsible for functions such as radio resource management, quality of service (quality of service, QoS) management, and data compression and encryption on an air interface side. The access network device may include various forms of base stations, such as a macro base station, a micro base station (also referred to as a small cell), a relay node, and an access point. In systems using different radio access technologies, a device having a function of a base station may have different names. For example, in a 5G system, the device is referred to as a gNB.

The DN includes a UAV monitor and management (unmanned monitor and management, UMM) network element and an authorized law enforcement offices (authorized law enforcement offices, ALEO) network element.

Other network elements in FIG. 1 andFIG. 2 are referred to as control plane network functions or entities, and are mainly configured to implement reliable and stable transmission of user layer traffic. A session management function (session management function, SMF) is mainly responsible for user plane network element selection, user plane network element redirection, internet protocol (internet protocol, IP) address allocation, and bearer establishment, modification, and release, and the like. An access and mobility management function (access and mobility management function, AMF) is mainly responsible for signaling processing, such as access control, mobility management, attachment and detachment, and network element selection. A policy control function (policy control function, PCF) network element mainly supports providing of a unified policy framework to control network behavior, provides a policy rule to a control plan network function, and is responsible for obtaining user subscription information related to policy decision. An application function (Application Function, AF) network element mainly supports interaction with a 3rd generation partnership project (the 3rd generation partner project, 3GPP) core network to provide a service, for example, affecting a data routing decision, a policy control function, or providing some third-party services for a network side. A network slice selection function (Network Slice Selection Function, NSSF) network element is mainly configured to select a network slice. An AUSF (Authentication Server Function) network element mainly provides functions of authentication and authorization. A unified data management (unified data management, UDM) network element may be configured to perform location management and subscription management. There is an assisted UAV management function (assistanted unmanned management function, AUMF) network element. The AUMF network element may be an independent network element, or may be integrated into another core network element. This is not limited herein. A network exposure function (Network Exposure Function, NEF) network element mainly supports secure interaction between a 3GPP network and a third-party application. An NEF network element can securely expose a network capability and event to a third party to enhance or improve application service quality. The 3GPP network can also securely obtain related data from the third party, to enhance intelligent decision-making of the network. In addition, the network element supports restoring structured data from a unified database or storing structured data in a unified database.

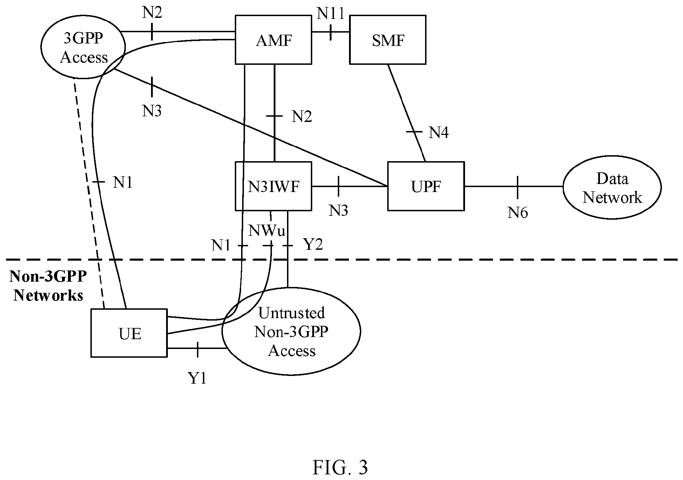

FIG. 1 andFIG. 2 are the schematic diagrams of 3GPP 5G network architectures. Actually, the unmanned aerial vehicle supervision method in this application is also applicable to a non-3GPP (non-3GPP) network architecture. The following describes the non-3GPP network architecture with reference to FIG. 3.

As shown in FIG. 3, compared with a 3GPP system architecture, a non-3GPP interworking function (Non-3GPP interworking function, N3IWF) network element is added to the non-3GPP network architecture. The non-3GPP network includes an untrusted non-3GPP access network (untrusted non-3GPP access network) device. The network element allows interconnection and interworking between UE and a 3GPP core network by using a non-3GPP technology. The non-3GPP technology is, for example, wireless fidelity (wireless fidelity, Wi-Fi), worldwide interoperability for microwave access (worldwide interoperability for microwave access, WiMAX), and a code division multiple access (code division multiple access, CDMA) network. Compared with a trusted non-3GPP access network device that can directly access the 3GPP core network, the network element needs to interconnect and interwork with the 3GPP core network by using a security tunnel established by using a security gateway. The security gateway is, for example, an evolved packet data gateway (evolved packet data gateway, ePDG) or an N3IWF network element.

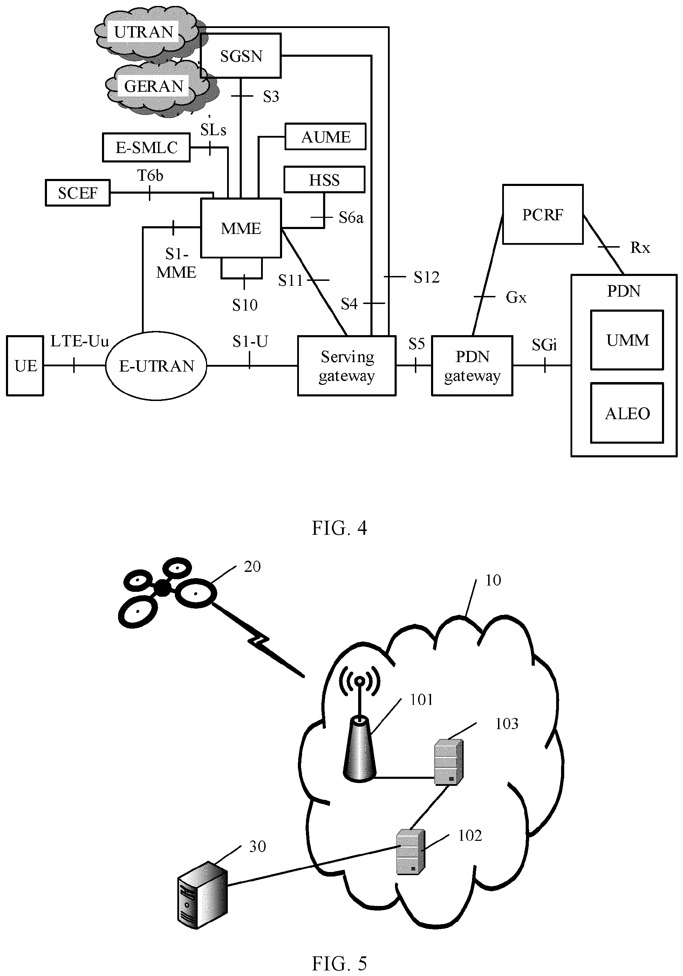

The foregoing describes the network architectures for the 5G network. The following describes a network architecture for a 4G network in this application with reference to FIG. 4.

As shown in FIG. 4, the network architecture for the 4G network may include UE, a mobility management entity (mobility management entity, MME), a serving gateway (serving gateway, S-GW), a packet data network gateway (packet data network gateway, P-GW), a serving GPRS support node (serving general packet radio service support node, SGSN), a home subscriber server (home subscriber server, HSS), a policy and charging rules function (policy and charging rules function, PCRF) entity, an evolved universal terrestrial radio access network (evolved universal terrestrial radio access network, E-UTRAN), and the like.

The E-UTRAN includes a plurality of evolved NodeBs (evolved nodeB, eNodeB), the eNodeBs are interconnected through an X2 interface, the eNodeBs interact with an evolved packet core (evolved packet core, EPC) through S1 interfaces, and the eNodeBs interconnect with the UE through long term evolution (long term evolution, LTE)-Uu interfaces.

Main functions of the MME network element include supporting of non-access stratum (non-access stratum, NAS) signaling and security thereof, management of a tracking area (track area, TA) list, P-GW selection and S-GW selection, MME selection during inter-MME handover, SGSN selection during handover to a 2G/3G access system, user authentication, roaming control and bearer management, and mobility management between core network nodes of different access networks of the 3rd Generation Partnership Project (3rd generation partnership project, 3GPP).

The S-GW is a gateway terminated at an E-UTRAN interface. Main functions of the S-GW include: during inter-eNodeB handover, serving as a local anchor point, and assisting in completing a reordering function of eNodeBs; and during handover between different 3GPP access systems, serving as a mobility anchor point to perform a lawful interception function, routing and forwarding a data packet, and grouping and marking at uplink and downlink transport layers for charging between operators.

The P-GW is a gateway for a PDN and terminates at an SGi interface. If UE accesses a plurality of PDNs, the UE corresponds to one or more P-GWs. Main functions of the P-GW include a user-based packet filtering function, a lawful interception function, an internet protocol (internet protocol, IP) address allocation function of UE, data-packet transport-level marking in uplink, uplink and downlink service level charging and service level threshold control, service-based uplink and downlink rate control, and the like.

The HSS is a database used to store subscription information of a subscriber, and a home network may include one or more HSSs. The HSS is responsible for storing subscriber-related information, such as a subscriber identifier, number and routing information, security information, location information, and profile (Profile) information.

The SGSN may be configured to: when UE moves between a 2G/3G access network and an E-UTRAN 3GPP access network, perform signaling interaction, including P-GW selection and S-GW selection, and selection of an MME for a UE handed over to the E-UTRAN 3GPP access network.

The PCRF entity terminates at an Rx interface and a Gx interface. In a non-roaming scenario, in a home public land mobile network (home public land mobile network, HPLMN), only one PCRF is related to one IP-connectivity access network (ip-connectivity access network, IP-CAN) session of UE. In a roaming scenario and when a service flow is locally steered, two PCRFs may be associated with one IP-CAN session of UE.

Some network elements in the 5G network corresponding to FIG. 2 may correspond to the network elements in FIG. 4 functionally. For example, the AUMF network element in the network architecture corresponding to FIG. 2 corresponds to an assisted UAV management entity (assistanted unmanned management entity, AUME) network element in FIG. 4. The AUME is connected to the mobility management entity (mobility management entity, MME) in the 4G network architecture. All or some functions of the AUME may also be integrated into another core network element, for example, the MME. This is not limited herein. The (R)AN in the network architecture corresponding to FIG. 2 corresponds to the evolved universal terrestrial radio access network (evolved universal terrestrial radio access network, E-UTRAN) in FIG. 4. The AMF in the network architecture corresponding toFIG. 2 corresponds to the MME in FIG. 4. The NEF in the network architecture corresponding toFIG. 2 corresponds to a service capability exposure unit (service capability exposure function, SCEF) in FIG. 4. The DN in the network architecture corresponding to FIG. 2 corresponds to the packet data network (packet data network, PDN) in FIG. 4.

The foregoing describes the 5G and 4G network architectures. The following first describes an unmanned aerial vehicle supervision system and unmanned aerial vehicle supervision method in this application from an overall perspective.

FIG. 5 is a schematic diagram of an embodiment of an unmanned aerial vehicle supervision system according to this application. As shown in FIG. 5, the unmanned aerial vehicle supervision system in this application may include a mobile network 10, an unmanned aerial vehicle 20, and a broadcast initiating device 30. The mobile network 10 includes an access network device 101 in a RAN, and the mobile network 10 further includes a core network element 102 and a target management network element 103 that are in a CN. The core network element 102 may communicate with the access network device 101 via the target management network element 103. The target management network element 103 may also be a core network element, for example, an access and mobility management function (access and mobility management function, AMF). If the core network element 102 is referred to as a first core network element, the target management network element 103 may be referred to as a second core network element. The broadcast initiating device 30 is a device for initiating a broadcast request, and may be a third-party network element or a core network element.

It should be noted that FIG. 5 shows only one access network device 101, one target management network element 103, and one unmanned aerial vehicle 20. In practice, a quantity of access network devices 101, a quantity of target management network elements 103, and a quantity of unmanned aerial vehicles 20 are not limited in this application. There may be two or more access network devices 101, target management network elements 103, and unmanned aerial vehicles 20.

A communications connection between the unmanned aerial vehicle 20 and the access network device 101 may be established by disposing a mobile subscriber identification card in the unmanned aerial vehicle 20, for example, a subscriber identification card (subscriber identification module, SIM) or a user identity module (user identity module, UIM). Alternatively, a mobile subscriber identification card is disposed in a controller paired with the unmanned aerial vehicle, so that a communications connection between the unmanned aerial vehicle 20 and the mobile network 10 can be indirectly established by using the controller corresponding to the unmanned aerial vehicle 20. In the following embodiments, data transmission between the unmanned aerial vehicle 20 and the mobile network 10 may be data transmission implemented by using the communications connection directly established between the unmanned aerial vehicle 20 and the mobile network 10, or may be data transmission implemented by using the communications connection indirectly established between the unmanned aerial vehicle 20 and the mobile network 10 by using the controller corresponding to the unmanned aerial vehicle.

In a process of supervising the unmanned aerial vehicle in a broadcast manner, the broadcast initiating device 30 may initiate a broadcast request for managing and controlling the unmanned aerial vehicle 20, or the core network element 102 itself may generate a broadcast request for managing and controlling the unmanned aerial vehicle 20. Therefore, the broadcast initiating device 30 in FIG. 5 may participate or may not participate in the process of supervising the unmanned aerial vehicle 20.

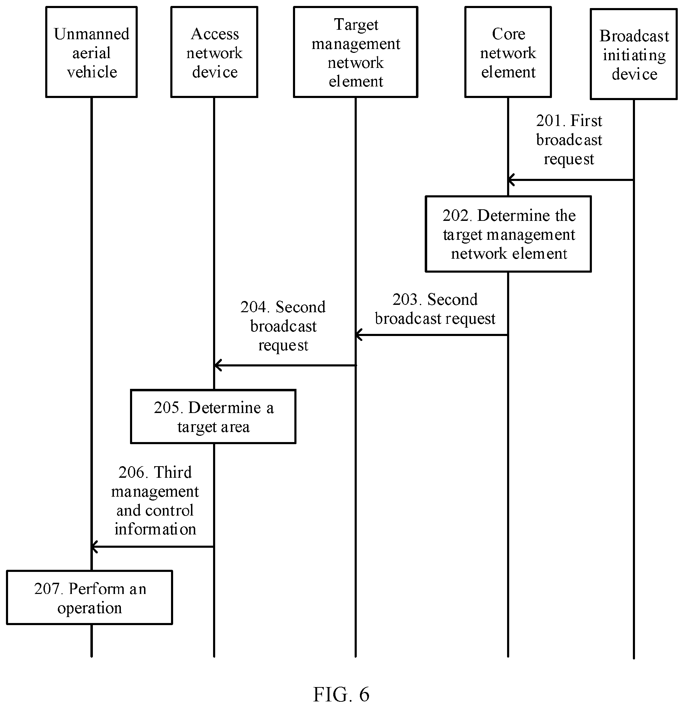

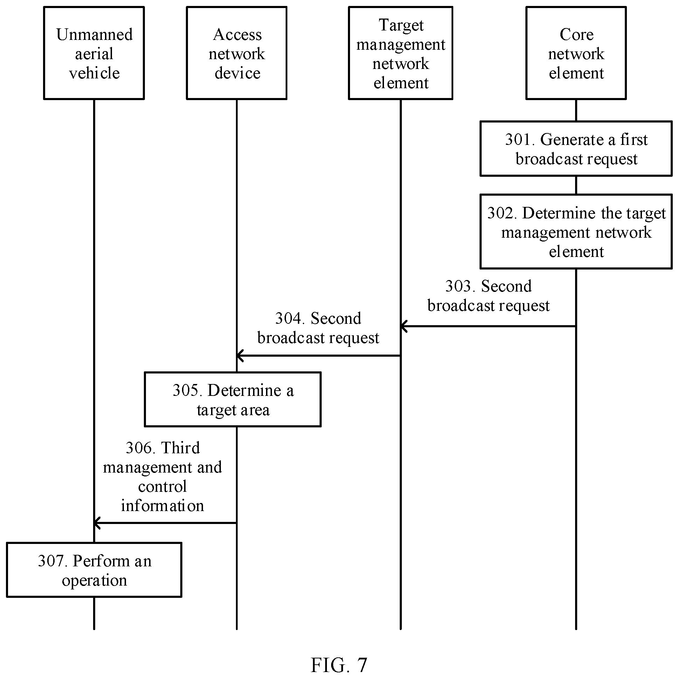

The following describes the unmanned aerial vehicle supervision method in this application separately with reference to FIG. 6 in which the broadcast initiating device 30 initiates the broadcast request and with reference to FIG. 7 in which the core network element 102 itself generates the broadcast request.

FIG. 6 is a schematic diagram of an embodiment of an unmanned aerial vehicle supervision method according to this application. As shown in FIG. 6, the embodiment of the unmanned aerial vehicle supervision method according to this application includes the following steps.

201. A broadcast initiating device sends a first broadcast request to a core network element.

The first broadcast request includes first management and control information and second management and control information, and the second management and control information includes first area information.

The first management and control information may include an operation instruction.

The first management and control information may include an operation instruction and a management and control type.

The first management and control information may include an operation instruction and management and control time information.

The first management and control information may include an operation instruction and alarm information.

The first management and control information may include an operation instruction, a management and control type, and alarm information.

The first management and control information may include an operation instruction, management and control time information, and alarm information.

The first management and control information may include an operation instruction, a management and control type, and management and control time information.

The first management and control information may include an operation instruction, a management and control type, management and control time information, and alarm information.

The operation instruction is used to indicate an operation that needs to be performed by an unmanned aerial vehicle, such as hovering, landing, or returning.

The management and control type is used to indicate a reason for performing management and control on the unmanned aerial vehicle, for example, an airport no-fly area or a densely-populated area in a city.

The management and control time information is used to indicate a time period in which the unmanned aerial vehicle is managed and controlled. For example, flight is forbidden in the time period.

The alarm information is used to indicate content of an alert or a warning, for example, specific information including no-fly or fly-restriction, for example, information indicating that a current area belongs to an airport, or information about a limited flying height.

202. The core network element determines a target management network element based on the first area information or second area information, where the second area information corresponds to the first area information.

Both the first area information and the second area information are used to indicate an area in which the unmanned aerial vehicle is managed and controlled.

The second area information may be the same as the first area information. In other words, the core network element does not convert the first area information. If the first area information is in a form of cell (cell) information or a form of a tracking area identity (track area identity, TAI) list, the core network element does not need to convert the first area information, and directly uses the first area information as the second area information.

If the first area information is represented not in a form of cell information or in a form of a TAI list, for example, the first area information is represented by using longitude and latitude, the core network element converts the first area information into the second area information, where the second area information includes information about a managed and controlled cell or a TAI list. In this case, the first area information is different from the second area information.

Regardless of whether the second area information is the same as the first area information, the core network element may determine, based on the first area information, the target management network element corresponding to the first area information. Alternatively, after determining the second area information, the core network element may determine, based on the second area information, the target management network element corresponding to the second area information.

203. The core network element sends a second broadcast request to the target management network element.

The second broadcast request includes third management and control information and fourth management and control information, the fourth management and control information includes the second area information, and the third management and control information corresponds to the first management and control information.

That the third management and control information corresponds to the first management and control information may be that the third management and control information is the same as the first management and control information, or the third management and control information includes the first management and control information and a configuration policy of access restriction, where the configuration policy of access restriction is used to indicate attribute information of an area in which access of the unmanned aerial vehicle is restricted. The attribute information may be information about a cell in which access of an unmanned aerial vehicle is restricted, or may be information about a TAI for which access of an unmanned aerial vehicle is restricted.

When the third management and control information is the same as the first management and control information, the first management and control information may also include a configuration policy of access restriction. In this case, the configuration policy of access restriction is determined by the broadcast initiating device.

When the third management and control information includes the first management and control information and the configuration policy of access restriction, the configuration policy is determined by the core network element based on the first area information.

If the configuration policy is not cell access restriction information, the core network element may further determine the cell access restriction information based on the configuration policy, where the cell access restriction information is used to indicate a cell in which access of an unmanned aerial vehicle is restricted.

204. The target management network element forwards the second broadcast request to the access network device.

Before forwarding the second broadcast request, the target management network element may determine, based on the second area information, the access network device for broadcasting.

205. After receiving the second broadcast request, the access network device determines, based on the second area information, a target area for broadcasting.

The target area may be a cell. The access network device may determine, based on the second area information, a cell for broadcasting. When the access network device performs broadcasting, the access network device may perform precise broadcasting only to a cell in which an unmanned vehicle needs to be managed and controlled, or the access network device may broadcast, based on different broadcasting precision, the third management and control message information to all cells for which the access network device is responsible, as long as all cells in which an unmanned vehicle needs to be managed and controlled can receive the third management and control information.

The access network device may further determine cell access restriction information based on the configuration policy of access restriction, where the cell access restriction information is used to indicate a cell in which access of an unmanned aerial vehicle is restricted.

It should be noted that the reason why description is made from a perspective of a core network element is that the core network element receives the first broadcast request, and the first broadcast request includes the first management and control information and the second management and control information. For ease of differentiation, the second broadcast request is used only when a core network sends a broadcast request, and management and control information included in the second broadcast request is expressed by using the third management and control information and the fourth management and control information. If description is made from a perspective of an access network device, the access network device relates to only one broadcast request, and the broadcast request received by the access network device may be expressed as the first broadcast request. But in practice, the first broadcast request corresponds to the second broadcast request sent by the core network element. For consistency of the former solution and the latter solution, in terms of description, the access network device receives the second broadcast request. However, if context consistency of the entire solutions is not considered, the broadcast request received by the access network device may be described as a first broadcast request, and management and control information included in the broadcast request received by the access network device may be described as first management and control information and second management and control information. Content of the first management and control information is consistent with that of the third management and control information, and content of the second management and control information is consistent with that of the fourth management and control information. That the unmanned aerial vehicle receives the third management and control information, which is mentioned in the following descriptions, is in the same way. The third management and control information is referred to as the third management and control information from an overall perspective for ease of context description, and may be directly referred to as management and control information from a perspective of an unmanned aerial vehicle only.

206. The access network device broadcasts the third management and control information to the unmanned aerial vehicle in the target area.

The access network device may broadcast the third management and control information in the following four forms:
(1). In an example not encompassed by the claims but useful for understanding the present disclosure, the access network device may broadcast a system message to the unmanned aerial vehicle in the target area, where the system message includes the third management and control information.
(2). The access network device broadcasts a system message to the unmanned aerial vehicle in the target area, where the system message includes the third management and control information; and the access network device broadcasts a paging message to the unmanned aerial vehicle in the target area, where the paging message includes indication information, and the indication information is used to indicate the unmanned aerial vehicle to obtain the third management and control information.
(3). In another example not encompassed by the claims but useful for understanding the present disclosure, the access network device may broadcast a system message to the unmanned aerial vehicle in the target area, where the system message includes the third management and control information and indication information, and the indication information is used to indicate the unmanned aerial vehicle to obtain the third management and control information.
(4). The access network device broadcasts a paging message to the unmanned aerial vehicle in the target area, where the paging message includes the third management and control information and indication information, and the indication information is used to indicate the unmanned aerial vehicle to obtain the third management and control information.

When broadcasting the third management and control information by using the system message, before broadcasting the third management and control information, the access network device encapsulates the third management and control information into system information blocks (system information block, SIB) of the system message, where the system information blocks include a first system information block and a second system information block. The first system information block includes scheduling information in the second system information block.

When the third management and control information is encapsulated, the first system information block includes scheduling information of the third management and control information, and the second system information block includes the third management and control information. Alternatively, in an example not encompassed by the claims but useful for understanding the present disclosure, the first system information block may include the third management and control information. In this case, the first system information block does not need to include scheduling information of the third management and control information.

Currently, there are SIBs 1 to 21. Each SIB may be referred to as a type. A SIB 1 may be understood as a first system information block, and other SIBs 2 to 21 may be understood as a second system information block. If the SIB type is further extended, for example, a newly-added SIB 22 or SIBs of more types may be understood as the second system information block. The SIB 1 includes scheduling information in another type of SIB. The scheduling information is information used to indicate a corresponding location of information that is to be obtained.

When the third management and control information is encapsulated in the SIB 1, neither a paging message nor indication information needs to be sent. Therefore, the form (1) in the foregoing four forms of broadcasting the third management and control information may be used.

When the third management and control information is encapsulated in a SIB other than the SIB 1, the scheduling information of the third management and control information needs to be added to the SIB 1, and the indication information needs to be sent regardless of whether the third management and control information is broadcasted from using the form (2) or the form (3) in the foregoing forms. In this way, the unmanned aerial vehicle may obtain the scheduling information of the third management and control information from the SIB 1 based on the indication information, and then obtain the third management and control information from a corresponding SIB based on the scheduling information.

There may be the following two manners of encapsulating the third management and control information in a SIB other than the SIB 1:
In a first manner, the third management and control information is encapsulated in a newly-added SIB. For example, the third management and control information is encapsulated in the SIB 22.
In a second manner, the third management and control information is encapsulated in a newly-added field of an existing SIB. For example, there are seven existing fields in the SIB 10. One or more fields may be added to the SIB 10, and the third management and control information is encapsulated in the one or more newly-added fields of the SIB 10.
If the third management and control information is encapsulated in the SIB 1, the third management and control information may be encapsulated in one or more newly-added fields of the SIB 1.

207. After receiving the third management and control information broadcasted from the access network device, the unmanned aerial vehicle performs a corresponding operation based on the third management and control information.

Corresponding to the four forms of broadcasting the third management and control information in step 206, the unmanned aerial vehicle may also receive the third management and control information in four corresponding forms.

If the access network device broadcasts the third management and control information in the foregoing form (1), the unmanned aerial vehicle may obtain the third management and control information from the SIB 1 in the system message.

If the access network device broadcasts the third management and control information in the foregoing form (2), the unmanned aerial vehicle may obtain the indication information from the paging message, obtain the scheduling information of the third management and control information from the SIB 1 in the system message based on the indication information, and obtain the third management and control information from a corresponding SIB based on the scheduling information.

If the access network device broadcasts the third management and control information in the foregoing form (3), the unmanned aerial vehicle may obtain the indication information from the system message, obtain the scheduling information of the third management and control information from the SIB 1 in the system message based on the indication information, and obtain the third management and control information from a corresponding SIB based on the scheduling information.

If the access network device broadcasts the third management and control information in the foregoing form (4), the unmanned aerial vehicle may obtain the indication information from the paging message, and obtain the third management and control information from the paging message based on the indication information.

The third management and control information may include an operation instruction.

The third management and control information may include an operation instruction and a management and control type.

The third management and control information may include an operation instruction and management and control time information.

The third management and control information may include an operation instruction and alarm information.

The third management and control information may include an operation instruction, a management and control type, and alarm information.

The third management and control information may include an operation instruction, management and control time information, and alarm information.

The third management and control information may include an operation instruction, a management and control type, and management and control time information.

The third management and control information may include an operation instruction, a management and control type, management and control time information, and alarm information.

The operation instruction is used to indicate an operation that needs to be performed by the unmanned aerial vehicle, such as hovering, landing, or returning.

The management and control type is used to indicate a reason for performing management and control on the unmanned aerial vehicle, for example, an airport no-fly area or a densely-populated area in a city.

The management and control time information is used to indicate a time period in which the unmanned aerial vehicle is managed and controlled. For example, flight is forbidden in the time period.

The alarm information is used to indicate content of an alert or a warning, for example, specific information including no-fly or fly-restriction, for example, information indicating that a current area belongs to an airport, or information about a limited flying height.

After receiving the third management and control information, the unmanned aerial vehicle may obtain the operation instruction, the management and control type, the management and control time information, or the alarm information in the third management and control information.

According to the operation instruction, the unmanned aerial vehicle may perform a corresponding operation such as hovering, landing, or returning.

Based on the management and control type, the unmanned aerial vehicle may learn of a reason for being supervised, and may further notify a user of the reason by using a controller or other user equipment.

Based on the management and control time information, the unmanned aerial vehicle may learn of the time period in which the unmanned aerial vehicle is managed and controlled. When performing flight selection, the unmanned aerial vehicle excludes a no-fly area or a fly-restricted area in the time period indicated by the management and control time information.

Based on the alarm information, the unmanned aerial vehicle may notify a user of content of an alert or a warning by using a controller or other user equipment, so that the user can learn of the reason for being alarmed.

The configuration policy of access restriction may affect the unmanned aerial vehicle in both a network layer and an application layer. From a perspective of the network layer, when receiving the configuration policy of access restriction, the unmanned aerial vehicle determines a candidate cell based on the configuration policy during cell handover or cell reselection. When determining the candidate cell, the unmanned aerial vehicle excludes a cell in which access of the unmanned aerial vehicle is forbidden and that is indicated by the configuration policy. From a perspective of the application layer, after receiving the configuration policy of access restriction, the unmanned aerial vehicle may remake path planning, and calculate a new flight path.

The foregoing describes the unmanned aerial vehicle supervision method in a case in which the broadcast initiating device initiates the broadcast request. The following describes, with reference to FIG. 7, an unmanned aerial vehicle supervision method in this application in a case in which a core network element generates a broadcast request.

FIG. 7 is a schematic diagram of another embodiment of an unmanned aerial vehicle supervision method according to this application. As shown in FIG. 7, the another embodiment of the unmanned aerial vehicle supervision method according to this application includes the following steps.

301. A core network element generates a first broadcast request.

The first broadcast request includes first management and control information and second management and control information, and the second management and control information includes first area information.

Steps 302 to 307 are the same as steps 202 to 207, and are not described herein again.

That the unmanned aerial vehicle is supervised in a broadcast manner is described in the foregoing solution, so that extensive and unified supervision on more types of unmanned aerial vehicles in a larger space range is implemented. This reduces difficulty in supervision on the unmanned aerial vehicles.

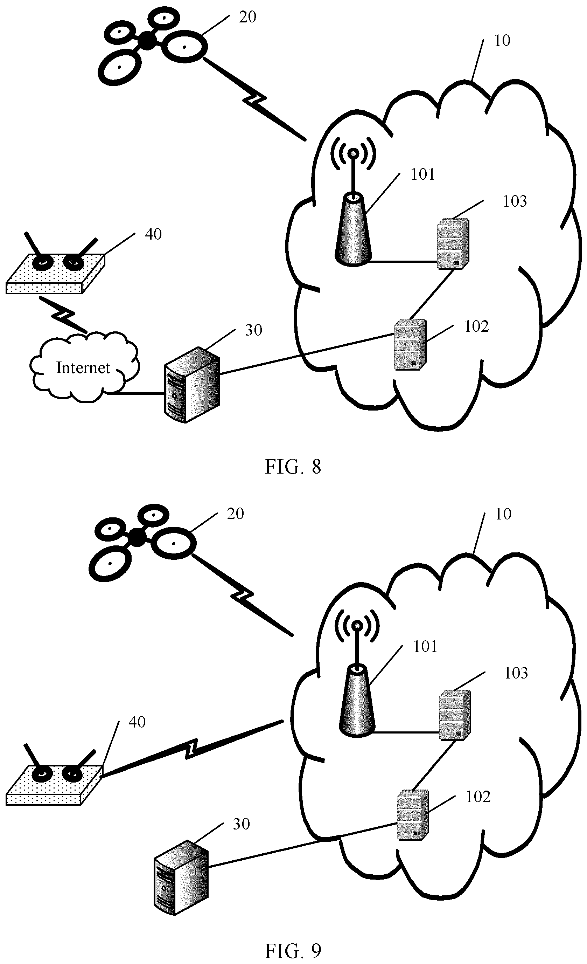

FIG. 8 to FIG. 10 are schematic diagrams of three possible scenarios in which an unmanned aerial vehicle system (including an unmanned aerial vehicle and a controller of the unmanned aerial vehicle) accesses a mobile network 10.

In the scenario corresponding to FIG. 8, the controller of the unmanned aerial vehicle is connected to a broadcast initiating device 30 by through an internet, the unmanned aerial vehicle is connected to the mobile network 10 by using a disposed mobile subscriber identification card, the broadcast initiating device is connected to the mobile network, and the controller of the unmanned aerial vehicle indirectly controls the unmanned aerial vehicle via the broadcast initiating device.

In the scenario corresponding to FIG. 9, both the controller of the unmanned aerial vehicle and the unmanned aerial vehicle are connected to the mobile network by using a disposed mobile subscriber identification card.

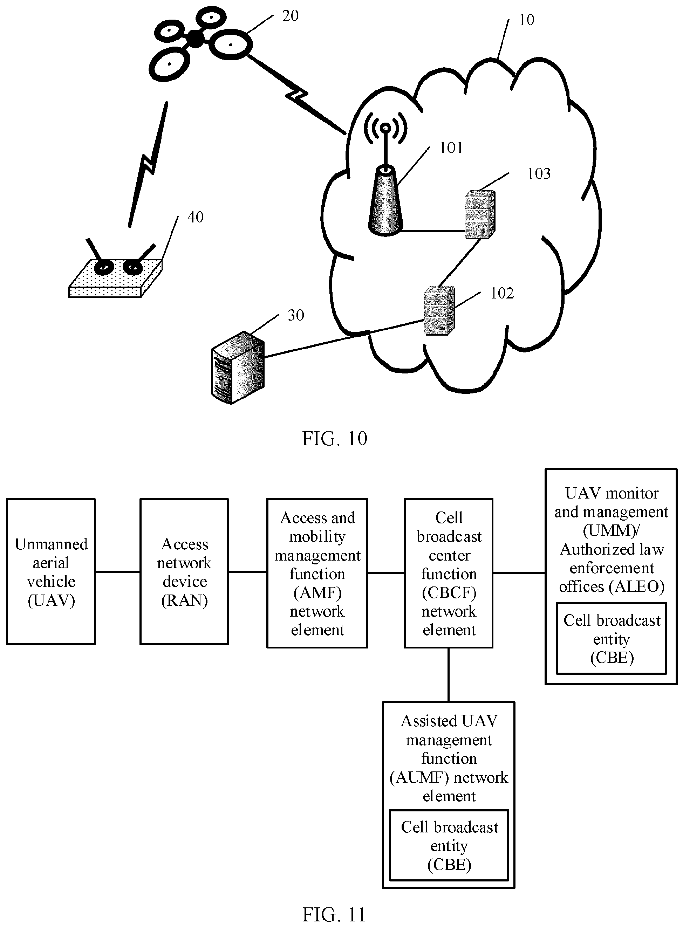

In the scenario corresponding to FIG. 10, the controller of the unmanned aerial vehicle controls the unmanned aerial vehicle by using a proprietary radio frequency protocol of a device vendor, and the unmanned aerial vehicle is still connected to the mobile network by using a disposed mobile subscriber identification card. The unmanned aerial vehicle and the controller of the unmanned aerial vehicle communicate with each other by using the proprietary radio frequency protocol.

It can be learned from the three scenarios in FIG. 8 to FIG. 10 that, as long as there is a module that can receive a broadcast of an access network device and that is on the unmanned aerial vehicle, supervision can be performed in the foregoing broadcast manner.

The broadcast initiating device 30 in FIG. 5 to FIG. 10 may be a third-party network element, for example, a UAV monitor and management (unmanned monitor and management, UMM) network element or an authorized law enforcement department (authorized law enforcement offices, ALEO) network element. The broadcast initiating device 30 may alternatively be a core network element, for example, an assisted UAV management function (assistanted unmanned management function, AUMF) network element. The core network element 102 may be a CBCF network element, or may be an AUMF network element integrated with a CBCF function. The access network device may be a RAN device. The following separately describes a case in which a CBCF is an independent core network element and a case in which a CBCF is integrated into an AUMF network element with reference tothe accompanying drawings.

FIG. 11 is a schematic diagram of a network architecture when a CBCF is an independent core network element. As shown in FIG. 11, a network architecture for unmanned aerial vehicle supervision according to this application includes an unmanned aerial vehicle, a RAN device, an AMF network element, a CBCF network element, an AUMF network element, and a UMM network element/an ALEO network element. A cell broadcast entity (cell broadcast entity, CBE) is integrated into each of the UMM network element/ALEO network element and the AUMF network element. The CBE is mainly responsible for formatting a cell broadcast system (cell broadcast system, CBS) message, including a function such as CBS message paging. Therefore, the AUMF network element and the UMM network element/ALEO network element may serve as a broadcast initiating device to send a broadcast request.

In addition, if the UMM network element/ALEO network element is in a trusted domain of an operator, the UMM network element/ALEO network element may directly send a broadcast request to the CBCF network element. If the UMM network element/ALEO network element is not in the trusted domain of the operator, when the UMM network element/ALEO network element sends a broadcast request to the CBCF, the broadcast request needs to pass through a network exposure function (network exposure function, NEF) network element. That the UMM network element/ALEO network element is located in a trusted domain of an operator may be understood as that the UMM network element/ALEO network element is a device of the operator.

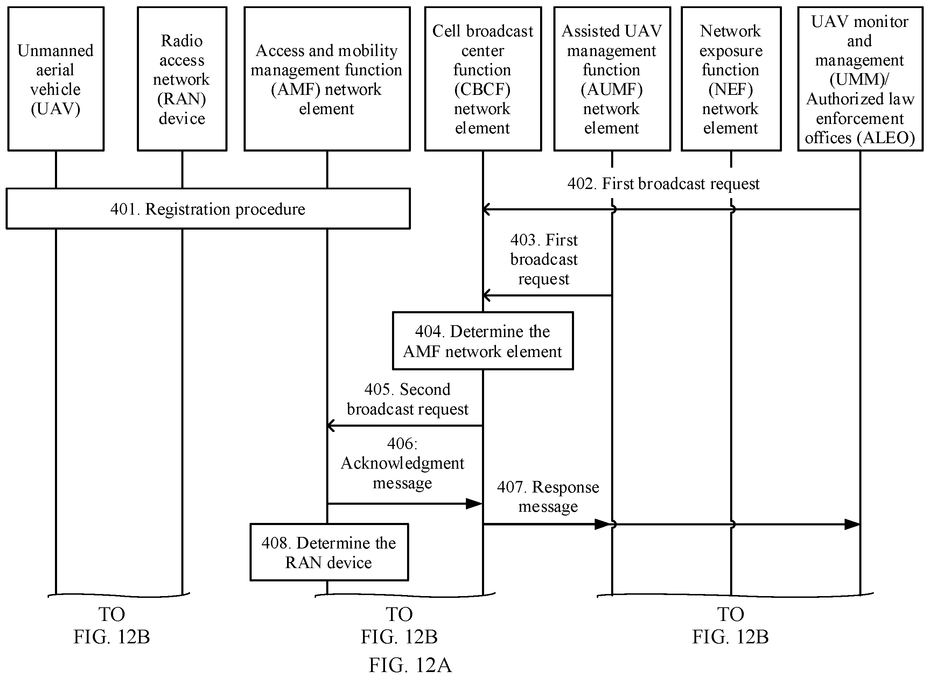

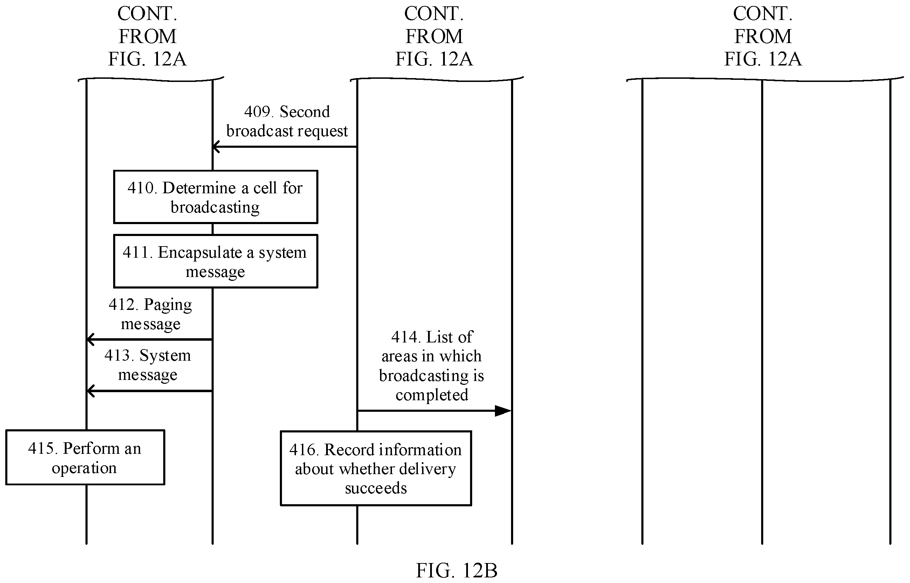

Referring to FIG. 12A and FIG. 12B, in the network architecture corresponding to FIG. 11, another embodiment of an unmanned aerial vehicle supervision method in which a NEF network element is introduced may include the following steps.

401. The unmanned aerial vehicle interacts with a core network element via a RAN device, to complete a registration procedure.

The core network element that interacts with the unmanned aerial vehicle to complete the registration procedure includes the AMF network element. The registration procedure includes a two-way authentication security procedure, and may include a plurality of steps. This process is not to be discussed in this application, and therefore is not described in detail in this application.

402. The UMM network element/ALEO network element sends a first broadcast request to the CBCF network element.

The first broadcast request includes first management and control information and second management and control information, and the second management and control information includes first area information.

If the UMM network element/ALEO network element is not in the trusted domain of the operator, the first broadcast request needs to pass through the NEF network element before reaching the CBCF network element.

After the NEF network element receives the first broadcast request, if the first area information is represented in a form of external geographic information, the NEF network element may perform information conversion on the first area information once, and may convert the area information represented in the form of the external geographic information into information in a form of a cell list or a TAI list, for example, convert location information of an airport into a cell list corresponding to an area at which the airport is located. Alternatively, the NEF may not perform conversion, and the CBCF network element may convert area information represented in a form of external geographic information into information in a form of a cell list or a TAI list.

403. The AUMF network element sends a first broadcast request to the CBCF network element.

Either step 402 or step 403 may be selected during configuration. If the CBE is integrated only into the UMM network element/ALEO network element, only the UMM network element/ALEO network element can send the first broadcast request. If the CBE is integrated only into the AUMF network element, only the AUMF network element can send the first broadcast request. If the CBE is integrated into both the UMM network element/ALEO network element and the AUMF network element, both the UMM network element/ALEO network element and the AUMF network element can send the first broadcast request. However, for management and control on same content, only one network element needs to perform sending, and step 402 and step 403 do not need to be performed in parallel.

404. After receiving the first broadcast request, the CBCF network element determines an AMF network element based on the first area information.

Even if the NEF network element performs area information conversion on the first broadcast request sent by the UMM network element/ALEO network element, a broadcast request obtained through conversion may also be referred to as the first broadcast request.

The CBCF network element may determine a corresponding AMF network element based on the first area information. If the first area information is not in a form of a cell list or a TAI list, the CBCF network element may convert the first area information into second area information that is in a form of a cell list or a TAI list. Alternatively, the CBCF network element may determine a corresponding AMF network element based on second area information after obtaining the second area information through conversion.

405. The CBCF network element sends a second broadcast request to the AMF network element.

The CBCF network element may indirectly forward the second broadcast request to the AMF network element via a public warning system interworking function (public warning system interworking function, PWS-IWF) network element. Generally, the CBCF network element and the PWS-IWF network element are co-deployed.

The second broadcast request includes third management and control information and fourth management and control information, the fourth management and control information includes the second area information, and the third management and control information corresponds to the first management and control information.

The second broadcast request may be a write-replace (write-replace) request. The write-replace request indicates that, by default, a new broadcast message replaces a former broadcast message. However, if the write-replace request includes a concurrency indication, it indicates that a new message and a former message can be broadcast at the same time.

If the first management and control information includes a management and control type, an operation instruction, alarm information, and management and control time information, in addition to corresponding information in the first management and control information, the third management and control information may further include information such as a message identifier, a sequence number, or a concurrency indication. Because a broadcast request may be sent by using a plurality of messages, each message may have a message identifier. These messages belong to a same sequence and have a same sequence number.

406. The AMF network element returns an acknowledgment message of the second broadcast request to the CBCF network element.

The acknowledgment message may further include an unknown TAI list. The unknown TAI list is used by the AMF network element to indicate, to the CBCF network element, an area in which a broadcast message cannot be delivered. For example, if a RAN device corresponding to a second area does not support a CBS broadcast capability, the RAN device cannot deliver the broadcast message.

407. The CBCF network element returns a response message to the UMM network element/ALEO network element, or the AUMF network element.

The response message is used to notify the UMM network element/ALEO network element or the AUMF network element that the AMF network element has forwarded, to the RAN device, management and control information used to manage and control the unmanned aerial vehicle.

408. The AMF network element determines, based on the second area information, a RAN device for broadcasting.

The AMF network element may determine, based on the TAI list or the cell list, the RAN device for broadcasting.

409. The AMF network element forwards the second broadcast request to the RAN device for broadcasting.

The second broadcast request includes the third management and control information and the fourth management and control information, and the fourth management and control information includes the second area information.

410. After receiving the second broadcast request, the RAN device determines, based on the second area information, a cell for broadcasting.

If the second area information is cell information, for example, a cell list, the cell for broadcasting may be directly determined based on the cell information. If the second area information is a TAI list, the cell for broadcasting may be further determined based on the TAI list.

411. The RAN device encapsulates the third management and control information in a system message.

For a manner of encapsulating the third management and control information by the RAN device, refer to related content in step 206 for understanding. Details are not described herein again.

412. The RAN device sends a paging message to the cell for broadcasting, where the paging message carries indication information.

The indication information is used to indicate the unmanned aerial vehicle to obtain the third management and control information.

413. The RAN device broadcasts a system message to the cell for broadcasting.

Actually, step 412 is not necessary. For example, when the third management and control information is encapsulated in a SIB 1, the paging message does not need to be sent, and the indication information does not need to be transmitted either.

For broadcasting of the third management and control information in steps 412 and 413, refer to the four broadcasting forms in step 206 for understanding.

414. The AMF network element returns, to the CBCF network element, a list of areas in which broadcasting is completed.

Step 414 may be performed, or may not be performed.

415. The unmanned aerial vehicle performs a corresponding operation based on the third management and control information.

After receiving the third management and control information, the UAV may perform the corresponding operation according to the operation instruction. For example, if the UAV receives a landing indication, the UAV ignores a flight instruction of a controller, and performs landing. Before performing the operation, user equipment needs to check whether the user equipment is a UAV device. If the user equipment is not a UAV device, silence processing is performed; if the user equipment is a UAV device, the corresponding operation is performed.

After receiving a configuration policy of access restriction, the UAV performs processing based on the actual situation. For example, if a radio resource control (radio resource control, RRC) layer receives cell access restriction information, cell selection and handover are affected. For example, during cell handover or cell reselection, the UAV determines a candidate cell based on the configuration policy. When determining the candidate cell, the UAV excludes a cell that is indicated by the configuration policy and in which access of the UAV is forbidden. When an application layer receives related information of a no-fly/fly-restricted area, the application layer may warn a user. For example, the application layer may send the information to a controller, and then display the information to the user.

Step 415 may also be understood with reference to related content in step 207.

416. The AMF network element records information indicating whether delivery of the second broadcast request succeeds.

The information indicating whether delivery of the second broadcast request succeeds is recorded, and may be used for subsequent analysis and tracing.

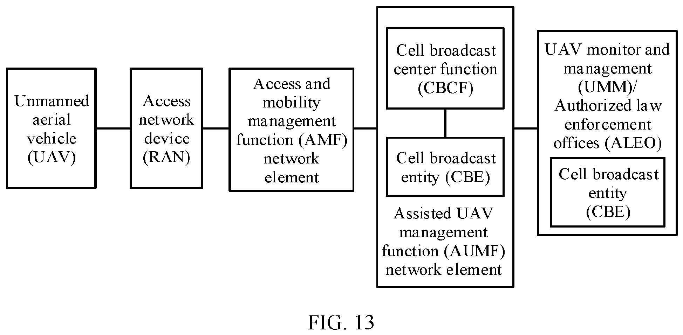

FIG. 13 is a schematic diagram of a network architecture when a CBCF is integrated into an AUMF network element. As shown in FIG. 13, another network architecture for unmanned aerial vehicle supervision according to this application includes an unmanned aerial vehicle, a RAN device, an AMF network element, an AUMF network element, and a UMM network element/an ALEO network element. A cell broadcast entity (cell broadcast entity, CBE) is integrated into each of the UMM network element/ALEO network element and the AUMF network element. The CBE is mainly responsible for formatting a cell broadcast system (cell broadcast system, CBS) message, including a function such as CBS message paging. Therefore, the UMM network element/ALEO network element may serve as a broadcast initiating device to send a broadcast request, and the AUMF network element itself may generate a broadcast request.

In addition, if the UMM network element/ALEO network element is in a trusted domain of an operator, the UMM network element/ALEO network element may directly send a broadcast request to a CBCF network element. If the UMM network element/ALEO network element is not in the trusted domain of the operator, when the UMM network element/ALEO network element sends a broadcast request to a CBCF, the broadcast request needs to pass through a network exposure function (network exposure function, NEF) network element. That the UMM network element/ALEO network element is located in a trusted domain of an operator may be understood as that the UMM network element/ALEO network element is a device of the operator.

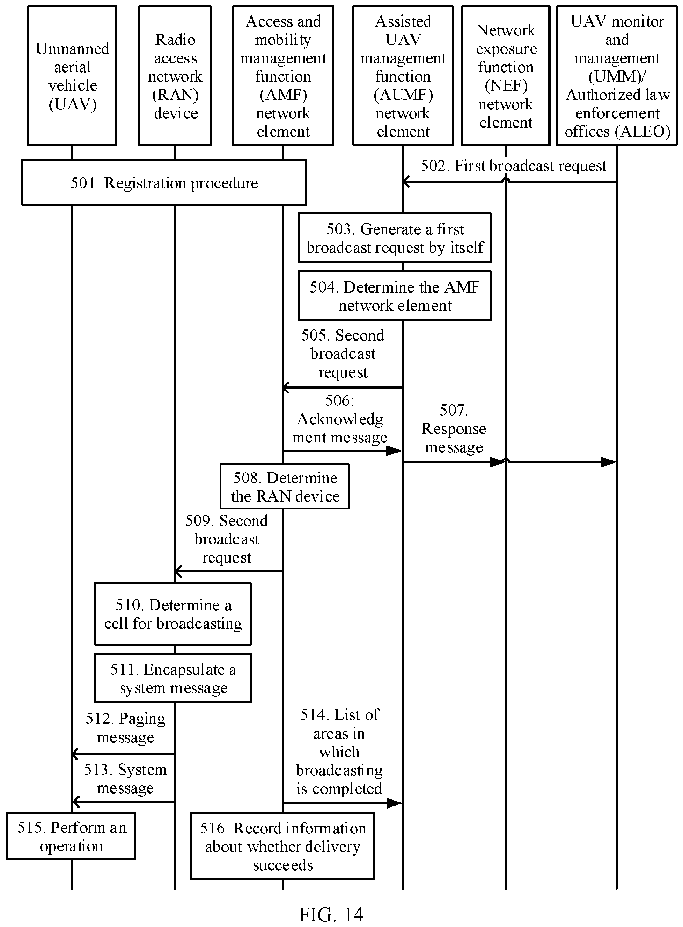

Referring to FIG. 14, in the network architecture corresponding to FIG. 13, another embodiment of an unmanned aerial vehicle supervision method in which a NEF network element is introduced may include the following steps.

In step 501 to step 516, only step 503 is different from step 403, and the other steps are all the same as content of step 401 to step 416 in the embodiment corresponding to FIG. 12A and FIG. 12B. In step 503, the AUMF network element itself generates a first broadcast request. For the other steps, refer to corresponding content in step 401 to step 416 for understanding, and details are not described herein again.

In the manners described in FIG. 11 to FIG. 14, network elements in the 5G network are used. However, the 5G network does not include only the network elements in FIG. 11 to FIG. 14. For understanding of other network elements in the 5G network and functions of the other network elements, refer to corresponding content in FIG. 1 to FIG. 3.

In the 5G network architectures in FIG. 1 and FIG. 2, network elements related to the method embodiments corresponding to FIG. 12A and FIG. 12B and FIG. 14 in this application, for example, the UMM network element/ALEO network element, the NEF network element, the AUMF network element, the AMF network element, the RAN device, and the UE, perform the processes in FIG. 12A and FIG. 12B and FIG. 14 according to the unmanned aerial vehicle supervision methods in the foregoing embodiments.

The UMM network element/ALEO network element in FIG. 11 to FIG. 14 may interact with the unmanned aerial vehicle via an N3IWF network element, to implement the unmanned aerial vehicle management and control methods corresponding to FIG. 12A and FIG. 12B and FIG. 14.

Based on the correspondence that is between the network elements in the 4G network and the network elements in the 5G network and that is described above, the unmanned aerial vehicle supervision method based on the 4G network architecture may also be understood with reference to the corresponding 5G network elements. For understanding, refer to the unmanned aerial vehicle supervision method corresponding to FIG. 12A and FIG. 12B or FIG. 14. Details are not described herein again.

The foregoing mainly describes the solutions provided in the embodiments of this application from a perspective of interaction between network elements. It may be understood that, to implement the foregoing functions, the core network element, the access network device, and the unmanned aerial vehicle include corresponding hardware structures and/or software modules for performing functions. A person skilled in the art should be easily aware that, in combination with functions described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

From a perspective of an entity device, the foregoing core network element, access network device, or unmanned aerial vehicle may be implemented by one entity device, may be jointly implemented by a plurality of entity devices, or may be a logical functional unit in one entity device. This is not specifically limited in the embodiments of this application.

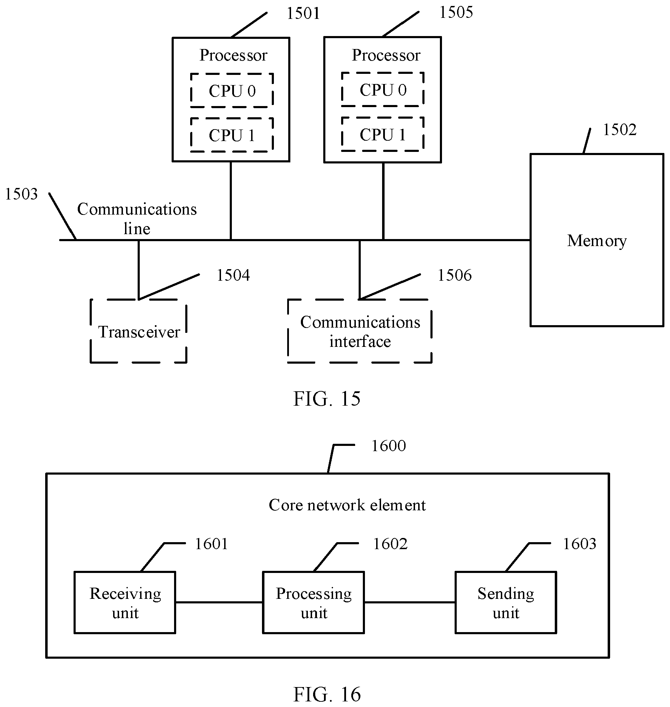

For example, the foregoing core network element, access network device, or unmanned aerial vehicle may be implemented by a communications device in FIG. 15. FIG. 15 is a schematic diagram of a hardware structure of a communications device according to an embodiment of this application. The communications device includes at least one processor 1501, a memory 1502, a communications line 1503, and a transceiver 1504.

The processor 1501 may be a general-purpose central processing unit (central processing unit, CPU), a microprocessor, an application-specific integrated circuit (application-specific integrated circuit, server IC), or one or more integrated circuits configured to control program execution of the solutions in this application.

The communications line 1503 may include a path for transmitting information between the foregoing components.

The transceiver 1504 is any transceiver-type apparatus, and is configured to communicate with another device or a communications network such as the Ethernet, a radio access network (radio access network, RAN), or a wireless local area network (wireless local area networks, WLAN). The transceiver 1504 may alternatively be a transceiver circuit or a transceiver machine. When the communications device is an access network device or an unmanned aerial vehicle, the communications device may include the transceiver.

The communications device may also include a communications interface 1506. For example, when the communications device is a core network element, the communications interface may be a corresponding interface in FIG. 1 to FIG. 4.

The memory 1502 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optic disk storage, optical disc storage (including a compact optical disc, a laser disc, an optical disc, a digital general-purpose optical disc, a blu-ray optical disc, or the like), or magnetic disk storage media or another magnetic storage device, or any other media that can be accessed by a computer and that can be configured to carry or store expected program code in an instruction form or in a data structure form, without being limited thereto. The memory may exist independently and is connected to the processor 1501 by using the communications line 1503. The memory 1502 may alternatively be integrated with the processor 1501.

The memory 1502 is configured to store a computer-executable instruction for executing the solutions of this application, and execution of the computer-executable instruction is controlled by the processor 1501. The processor 1501 is configured to execute the computer-executable instruction stored in the memory 1502, to implement the unmanned aerial vehicle supervision method provided in the foregoing method embodiments of this application.

In a possible implementation, the computer-executable instruction in this embodiment of this application may also be referred to as application program code. This is not specifically limited in this embodiment of this application.

During specific implementation, in an embodiment, the processor 1501 may include one or more CPUs, such as a CPU 0 and a CPU 1 in FIG. 15.

During specific implementation, in an embodiment, the communications device may include a plurality of processors, such as the processor 1501 and a processor 1505 in FIG. 15. Each of the processors may be a single-core (single-CPU) processor or a multi-core (multi-CPU) processor. The processor herein may be one or more devices, circuits, and/or processing cores for processing data (such as a computer-executable instruction).

From a perspective of a functional unit, in this application, division into functional units of a core network element, an access network device, and an unmanned aerial vehicle may be based on the foregoing method embodiments. For example, each functional unit may be obtained through division based on each corresponding function, or two or more functions may be integrated into one functional unit. The integrated functional unit may be implemented in a form of hardware, or may be implemented in a form of a software functional unit.

For example, when the functional units are obtained through division in an integrated manner, FIG. 16 is a schematic structural diagram of a core network element. As shown in FIG. 16, an embodiment of the core network element 1600 in this application may include a receiving unit 1601, a processing unit 1602, and a sending unit 1603.

The receiving unit 1601 is configured to obtain a first broadcast request, where the first broadcast request includes first management and control information and second management and control information that are used to manage and control an unmanned aerial vehicle, and the second management and control information includes first area information.

The processing unit 1602 is configured to determine a target management network element based on the first area information or second area information obtained by the receiving unit 1601, where the second area information corresponds to the first area information.

The sending unit 1603 is configured to send a second broadcast request to the target management network element determined by the processing unit 1602, where the second broadcast request includes third management and control information and fourth management and control information, the fourth management and control information includes the second area information, and the third management and control information corresponds to the first management and control information.

When the core network element itself generates the first broadcast request, the first broadcast request is generated by the processing unit 1602.

That the unmanned aerial vehicle is supervised in a broadcast manner is described in the foregoing solution, so that extensive and unified supervision on more types of unmanned aerial vehicles in a larger space range is implemented. This reduces difficulty in supervision on the unmanned aerial vehicles.

In some embodiments of this application, the second area information is the same as the first area information.

In some embodiments of this application, the processing unit 1602 is further configured to determine the second area information based on the first area information, where the second area information is different from the first area information.

In some embodiments of this application, the processing unit 1602 is configured to: determine, based on the first area information, a target management network element corresponding to the first area information; or determine, based on the second area information, a target management network element corresponding to the second area information.

In some embodiments of this application, the second area information includes information about a managed and controlled cell or a tracking area identifier list.

In some embodiments of this application, the third management and control information includes a configuration policy of access restriction, and the configuration policy is used to indicate attribute information of an area in which access of the unmanned aerial vehicle is restricted.

In some embodiments of this application, the processing unit 1602 is further configured to: when the third management and control information includes the configuration policy of access restriction, determine cell access restriction information based on the configuration policy, where the cell access restriction information is used to indicate a cell in which access of the unmanned aerial vehicle is restricted, and the configuration policy is used to indicate attribute information of an area in which access of the unmanned aerial vehicle is restricted.

In some embodiments of this application, the second area information is used to indicate an area in which the unmanned aerial vehicle is managed and controlled.

The third management and control information includes an operation instruction, and the operation instruction is used to indicate an operation that needs to be performed by the unmanned aerial vehicle.

In some embodiments of this application, the third management and control information further includes a management and control type, management and control time information, or alarm information.

The management and control type is used to indicate a reason for performing management and control on the unmanned aerial vehicle.

The management and control time period information is used to indicate a time period in which the unmanned aerial vehicle is managed and controlled.

The alarm information is used to indicate content of an alert or a warning.

The core network element 1600 according to this embodiment of this application is configured to perform the method performed by the core network element in the method embodiment corresponding to FIG. 6 or FIG. 7. For understanding of this embodiment of this application, refer to a related part in the method embodiment corresponding to FIG. 6 or FIG. 7.

In this embodiment of this application, the core network element 1600 is presented in a form of functional units obtained through division in an integrated manner. The "functional unit" herein may be an application-specific integrated circuit (application-specific integrated circuit, ASIC), a processor and a memory that execute one or more software or firmware programs, an integrated logic circuit, and/or another device that can provide the foregoing functions. In a simple embodiment, a person skilled in the art may figure out that the core network element 1600 may be in the form shown in FIG. 15.

For example, the processor 1501 in FIG. 15 may invoke the computer-executable instruction stored in the memory 1502, so that the core network element 1600 performs the method performed by the core network element in the method embodiment corresponding to FIG. 6 or FIG. 7.

Specifically, functions/implementation processes of the receiving unit 1601, the processing unit 1602, and the sending unit 1603 in FIG. 16 may be implemented by the processor 1501 in FIG. 15 by invoking the computer-executable instruction stored in the memory 1502. Alternatively, a function/an implementation process of the processing unit 1602 in FIG. 16 may be implemented by the processor 1501 in FIG. 15 by invoking the computer-executable instruction stored in the memory 1502, and functions/implementation processes of the receiving unit 1601 and the sending unit 1603 in FIG. 16 may be implemented by using the transceiver 1504 in FIG. 15.

The core network element according to this embodiment of this application may be configured to perform the method in the embodiment corresponding to FIG. 6 or FIG. 7. For technical effects that can be obtained in this embodiment of this application, refer to the method embodiment corresponding to FIG. 6 or FIG. 7. Details are not described herein again.

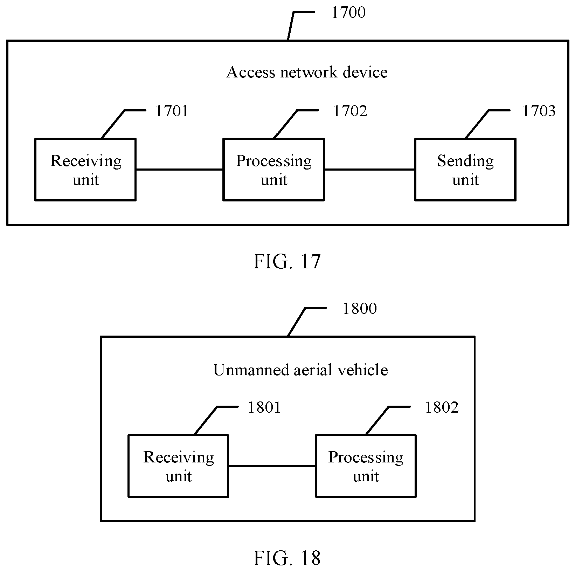

For example, when the functional units are obtained through division in an integrated manner, FIG. 17 is a schematic structural diagram of an access network device. As shown in FIG. 17, an embodiment of the access network device 1700 in this application may include a receiving unit 1701, a processing unit 1702, and a sending unit 1703.

The receiving unit 1701 is configured to receive a second broadcast request sent by a core network element, where the second broadcast request includes third management and control information and fourth management and control information that are used to manage and control an unmanned aerial vehicle, and the fourth management and control information includes second area information.

The processing unit 1702 is configured to determine, based on the second area information received by the receiving unit 1701, a target area for broadcasting.

The sending unit 1703 is configured to send the third management and control information to an unmanned aerial vehicle in the target area determined by the processing unit 1702, where the third management and control information is used to indicate the unmanned aerial vehicle to perform a corresponding operation.

In some embodiments of this application, the sending unit 1703 is configured to broadcast a system message to the unmanned aerial vehicle in the target area, where the system message includes the third management and control information.

In some embodiments of this application, the sending unit 1703 is further configured to broadcast a paging message to the unmanned aerial vehicle in the target area, where the paging message includes indication information, and the indication information is used to indicate the unmanned aerial vehicle to read the third management and control information.

In some embodiments of this application, the sending unit 1703 is configured to broadcast a system message to the unmanned aerial vehicle in the target area, where the system message includes the third management and control information and indication information, and the indication information is used to indicate the unmanned aerial vehicle to read the third management and control information.

In some embodiments of this application, the sending unit 1703 is configured to broadcast a paging message to the unmanned aerial vehicle in the target area, where the paging message includes the third management and control information and indication information, and the indication information is used to indicate the unmanned aerial vehicle to read the third management and control information.

In some embodiments of this application, the access network device 1700 further includes:
the processing unit 1702, further configured to encapsulate the third management and control information in a system information block of the system message.

In some embodiments of this application, the processing unit 1702 is further configured to: when the third management and control information includes a configuration policy of access restriction, determine cell access restriction information based on the configuration policy, where the cell access restriction information is used to indicate a cell in which access of the unmanned aerial vehicle is restricted, and the configuration policy is used to indicate attribute information of an area in which access of the unmanned aerial vehicle is restricted.

In some embodiments of this application, the processing unit 1702 is further configured to determine, based on the second area information, a cell for broadcasting.

The access network device 1700 according to this embodiment of this application is configured to perform the method performed by the access network device in the method embodiment corresponding to FIG. 6 or FIG. 7. For understanding of this embodiment of this application, refer to a related part in the method embodiment corresponding to FIG. 6 or FIG. 7.

In this embodiment of this application, the access network device 1700 is presented in a form of functional units obtained through division in an integrated manner. The "functional unit" herein may be an application-specific integrated circuit (application-specific integrated circuit, ASIC), a processor and a memory that execute one or more software or firmware programs, an integrated logic circuit, and/or another device that can provide the foregoing functions. In a simple embodiment, a person skilled in the art may figure out that the access network device 1700 may be in the form shown in FIG. 15.

For example, the processor 1501 in FIG. 15 may invoke the computer-executable instruction stored in the memory 1502, so that the access network device 1700 performs the method performed by the access network device in the method embodiment corresponding to FIG. 6 or FIG. 7.

Specifically, functions/implementation processes of the receiving unit 1701, the processing unit 1702, and the sending unit 1703 in FIG. 17 may be implemented by the processor 1501 in FIG. 15 by invoking the computer-executable instruction stored in the memory 1502. Alternatively, functions/implementation processes of the receiving unit 1701 and the sending unit 1703 in FIG. 17 may be implemented by using the transceiver 1504 in FIG. 15.

The access network device 1700 according to this embodiment of this application may be configured to perform the method in the embodiment corresponding to FIG. 6 or FIG. 7. For technical effects that can be obtained in this embodiment of this application, refer to the method embodiment corresponding to FIG. 6 or FIG. 7. Details are not described herein again.

For example, when the functional units are obtained through division in an integrated manner, FIG. 18 is a schematic structural diagram of an unmanned aerial vehicle. As shown in FIG. 18, an embodiment of the unmanned aerial vehicle 1800 in this application may include a receiving unit 1801 and a processing unit 1802.

The receiving unit 1801 is configured to receive third management and control information broadcasted from an access network device.

The processing unit 1802 is configured to perform a corresponding operation based on the third management and control information received by the receiving unit 1801.

In some embodiments of this application,
the receiving unit 1801 is configured to receive a system message broadcasted from the access network device, where the system message includes the third management and control information; and
the processing unit 1802 is configured to read the third management and control information from the system message received by the receiving unit 1801.

In some embodiments of this application, the receiving unit 1801 is further configured to receive a paging message broadcasted from the access network device, where the paging message includes indication information; and
the processing unit 1802 is further configured to read the third management and control information from the system message based on the indication information.

In some embodiments of this application, the receiving unit 1801 is configured to receive a system message broadcasted from the access network device, where the system message includes the third management and control information and indication information, and the indication information is used to indicate the unmanned aerial vehicle to read the third management and control information; and
the processing unit 1802 is configured to read the third management and control information from the system message based on the indication information received by the receiving unit 1801.

In some embodiments of this application, the receiving unit 1801 is configured to receive a paging message broadcasted from the access network device, where the paging message includes the third management and control information and indication information, and the indication information is used to indicate the unmanned aerial vehicle to read the third management and control information; and
the processing unit 1802 is configured to read the third management and control information from the paging message based on the indication information received by the receiving unit 1801.

In some embodiments of this application, the system message includes a first system information block and a second system information block; the first system information block includes scheduling information in the second system information block;
the first system information block includes scheduling information of the third management and control information; and
the second system information block includes the third management and control information.

In some embodiments of this application, the unmanned aerial vehicle further includes a determining unit 1804.

The processing unit 1802 is further configured to: during cell handover or cell reselection, determine a candidate cell based on a configuration policy included in the third management and control information, where the configuration policy is used to indicate attribute information of an area in which access of the unmanned aerial vehicle is restricted.

In some embodiments of this application, the processing unit 1802 is configured to: when the third management and control information includes an operation instruction, perform a corresponding operation according to the operation instruction, where the operation instruction includes hovering, landing, or returning.

The unmanned aerial vehicle 1800 according to this embodiment of this application is configured to perform the method performed by the unmanned aerial vehicle in the method embodiment corresponding to FIG. 6 or FIG. 7. For understanding of this embodiment of this application, refer to a related part in the method embodiment corresponding to FIG. 6 or FIG. 7.

In this embodiment of this application, the unmanned aerial vehicle 1800 is presented in a form of functional units obtained through division in an integrated manner. The "functional unit" herein may be an application-specific integrated circuit (application-specific integrated circuit, ASIC), a processor and a memory that execute one or more software or firmware programs, an integrated logic circuit, and/or another device that can provide the foregoing functions. In a simple embodiment, a person skilled in the art may figure out that the unmanned aerial vehicle 1800 may be in the form shown in FIG. 15.

For example, the processor 1501 in FIG. 15 may invoke the computer-executable instruction stored in the memory 1502, so that the unmanned aerial vehicle 1800 performs the method performed by the unmanned aerial vehicle in the method embodiment corresponding toFIG. 2 or FIG. 3.

Specifically, functions/implementation processes of the receiving unit 1801 and the processing unit 1802 in FIG. 18 may be implemented by the processor 1501 in FIG. 15 by invoking the computer-executable instruction stored in the memory 1502. Alternatively, a function/an implementation process of the processing unit 1802 in FIG. 18 may be implemented by the processor 1501 in FIG. 15 by invoking the computer-executable instruction stored in the memory 1502, and a function/an implementation process of the receiving unit 1801 in FIG. 18 may be implemented by using the transceiver 1504 in FIG. 15.

The unmanned aerial vehicle 1800 according to this embodiment of this application may be configured to perform the method in the embodiment corresponding to FIG. 6 or FIG. 7. For technical effects that can be obtained in this embodiment of this application, refer to the method embodiment corresponding to FIG. 6 or FIG. 7. Details are not described herein again.

Components in the devices in FIG. 16 to FIG. 18 of this application are communicatively connected. To be specific, the processing unit (or the processor), the storage unit (or the memory), and the transceiver unit (the transceiver) communicate with each other through an internal connection path, to transmit a control signal and/or a data signal. The foregoing method embodiments of this application may be applied to the processor, or the processor implements the steps in the foregoing method embodiments. The processor may be an integrated circuit chip and has a signal processing capability. In an implementation process, the steps in the foregoing method embodiments may be completed by using a hardware integrated logic circuit in the processor or an instruction in a form of software. The processor may be a central processing unit (central processing unit, CPU), a network processor (network processor, NP), a combination of a CPU and an NP, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, or a discrete hardware component. The processor may implement or perform the methods, the steps, and logical block diagrams that are disclosed in this application. The general-purpose processor may be a microprocessor, or the processor may be any conventional processor or the like. The steps of the methods disclosed with reference to this application may be directly performed and completed by using a hardware decoding processor, or may be performed and completed by using a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps in the foregoing methods in combination with the hardware of the processor. Although only one processor is shown in the figure, the apparatus may include a plurality of processors, or the processor includes a plurality of processing units. Specifically, the processor may be a single-core (single-CPU) processor or a multi-core (multi-CPU) processor.

The memory is configured to store a computer instruction executed by the processor. The memory may be a storage circuit or a memory. The memory may be a volatile memory or a non-volatile memory, or may include both a volatile memory and a non-volatile memory. The nonvolatile memory may be a read-only memory, a programmable read-only memory, an erasable programmable read-only memory, an electrically erasable programmable read-only memory, or a flash memory. The volatile memory may be a random access memory, and is used as an external cache. The memory may be independent of the processor, or may be a storage unit in the processor. This is not limited herein. Although only one memory is shown in the figure, the apparatus may alternatively include a plurality of memories, or the memory includes a plurality of storage units.

The transceiver is configured to implement content exchange between the processor and another unit or network element. Specifically, the transceiver may be a communications interface of the apparatus, or may be a transceiver circuit or a communications unit, or may be a transceiver. The transceiver may alternatively be a communications interface or transceiver circuit of the processor. Optionally, the transceiver may be a transceiver chip. The transceiver may further include a sending unit and/or a receiving unit. In a possible implementation, the transceiver may include at least one communications interface. In another possible implementation, the transceiver may alternatively be a unit implemented in a form of software. In the embodiments of this application, the processor may interact with another unit or network element through the transceiver. For example, the processor obtains or receives content from another network element through the transceiver. If the processor and the transceiver are two physically separated components, the processor may exchange content with another unit in the apparatus without using the transceiver.

In a possible implementation, the processor, the memory, and the transceiver may be connected to each other by using a bus. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like.

In the embodiments of this application, the words such as "example" or "for example" are used to represent giving an example, an illustration, or a description. Any embodiment or design solution described by using "example" or "for example" in the embodiments of this application shall not be construed as being more preferred or more advantageous than another embodiment or design solution. Exactly, use of the word "example", "for example", or the like is intended to present a relative concept in a specific manner.

In the embodiments of this application, for ease of understanding, a plurality of examples are used for description. However, these examples are merely examples, but this does not mean that these examples are optimal implementations for implementing this application.

In the embodiments of this application, for ease of description, a request message, a response message, and names of various other messages are used. However, these messages are merely used as examples to describe content that needs to be carried or an implemented function. Specific names of the messages constitute no limitation to this application. For example, the messages may be a first message, a second message, and a third message. These messages may be some specific messages, or may be some fields in a message. These messages may alternatively represent various service operations.

All or some of the foregoing embodiments may be implemented by software, hardware, firmware, or any combination thereof. When software is used to implement the embodiments, the embodiments may be implemented partially in a form of a computer program product.

The computer program product includes one or more computer instructions. When the computer-executable instruction is loaded and executed on the computer, the procedure or functions according to the embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

The technical solutions provided in this application are described in detail above. The principle and implementation of this application are described herein through specific examples. The description about the embodiments is merely provided to help understand the method and core ideas of this application. In addition, a person of ordinary skill in the art can make variations to the specific implementations. Therefore, the content of specification shall not be construed as a limit to this application.

## Claims

1. An unmanned aerial vehicle supervision method, comprising:
receiving (206, 306), by an unmanned aerial vehicle (20), management and control information broadcasted from an access network device (101), wherein the management and control information includes an operation instruction, where the operation instruction is used to indicate an operation that needs to be performed by the unmanned aerial vehicle (20), being hovering, landing, or returning, wherein the unmanned aerial vehicle (20) is in a target area indicated by area information, and wherein the area information is used to indicate an area in which the unmanned aerial vehicle (20) is managed and controlled;
performing (207, 307), by the unmanned aerial vehicle (20), the corresponding operation based on the management and control information,
wherein
the receiving, by the unmanned aerial vehicle (20), management and control information broadcasted from an access network device (101) comprises:
receiving, by the unmanned aerial vehicle (20), a system message broadcasted from the access network device (101), wherein the system message comprises the management and control information; and
obtaining, by the unmanned aerial vehicle (20), the management and control information from the system message; and
the method further comprises:
receiving, by the unmanned aerial vehicle (20), a paging message broadcasted from the access network device (101), wherein the paging message comprises indication information; and
the obtaining, by the unmanned aerial vehicle (20), the management and control information from the system message comprises:
obtaining, by the unmanned aerial vehicle (20), the management and control information from the system message based on the indication information,
wherein the system message comprises a first system information block and a second system information block; and
the first system information block comprises scheduling information of the management and control information; and
the second system information block comprises the management and control information.

2. The method according to claim 1, wherein the management and control information comprises a configuration policy of access restriction, and the configuration policy indicates attribute information of an area in which access of the unmanned aerial vehicle (20) is restricted; and the method further comprises:
determining, by the unmanned aerial vehicle (20), a candidate cell based on the configuration policy during cell handover or cell reselection.

3. The method according to claim 1 or 2, wherein the management and control information further comprises a management and control type, management and control time information, or alarm information, wherein
the management and control type indicates a reason for performing management and control on the unmanned aerial vehicle (20);
the management and control time information indicates a time period in which the unmanned aerial vehicle (20) is managed and controlled; and
the alarm information indicates content of an alert or a warning.

4. An unmanned aerial vehicle supervision method, comprising:
receiving (204, 304), by an access network device (101), a broadcast request from a core network element (102), wherein the broadcast request comprises third management and control information and fourth management and control information for managing and control an unmanned aerial vehicle (20), and the fourth management and control information comprises area information, wherein the third management and control information includes an operation instruction, where the operation instruction is used to indicate an operation that needs to be performed by the unmanned aerial vehicle (20), being hovering, landing, or returning, and wherein the area information is used to indicate an area in which the unmanned aerial vehicle (20) is managed and controlled;
determining (205, 305), by the access network device (101) based on the area information, a target area for broadcasting; and
broadcasting (206, 306), by the access network device (101), the third management and control information to an unmanned aerial vehicle (20) in the target area, wherein the third management and control information indicates the unmanned aerial vehicle (20) to perform the corresponding operation,
wherein
the broadcasting (206, 306), by the access network device (101), the third management and control information to an unmanned aerial vehicle (20) in the target area comprises:
broadcasting, by the access network device (101), a system message to the unmanned aerial vehicle (20) in the target area, wherein the system message comprises the third management and control information; and
the method further comprises:
broadcasting, by the access network device (101), a paging message to the unmanned aerial vehicle (20) in the target area, wherein the paging message comprises indication information, and the indication information indicates the unmanned aerial vehicle (20) to obtain the third management and control information,
wherein the system message comprises a first system information block and a second system information block; and
the first system information block comprises scheduling information of the management and control information; and
the second system information block comprises the management and control information.

5. The method according to claim 4, further comprising:
sending (203, 303), by the core network element (102), the broadcast request.

6. An unmanned aerial vehicle supervision system, comprising: a core network element (102) and an access network device (101) that is configured to communicate with the core network element (102), wherein
the access network device (101) is configured to perform the method in claim 4.

7. A computer-readable storage medium, wherein the computer-readable storage medium stores one or more computer-executable instructions; and when the computer-executable instruction is executed by a processor comprised in unmanned aerial vehicle, the unmanned aerial vehicle is enabled to perform the method according to any one of claims 1 to 3.

8. An unmanned aerial vehicle (20), comprising:
a memory, configured to store computer executable instructions; and
at least one processor, configured to execute the instructions stored, to cause the unmanned aerial vehicle (20) to perform the method in any one of claims 1 to 3.

9. An access network device (101), comprising:
a memory, configured to store computer executable instructions; and
at least one processor, configured to execute the instructions stored, to cause the access network device (101) to perform the method in claim 4.

## Patentansprüche

1. Verfahren für eine Überwachung eines unbemannten Luftfahrzeugs, das umfasst:
Empfangen (206, 306), durch ein unbemanntes Luftfahrzeug (20), von Verwaltungs- und Steuerinformationen, die von einer Zugangsnetzwerkvorrichtung (101) rundgesendet werden, wobei die Verwaltungs- und Steuerinformationen eine Betriebsanweisung einschließen, wobei die Betriebsanweisung verwendet wird, um einen Betrieb, der durch das unbemannte Luftfahrzeug (20) durchgeführt werden muss, der Schweben, Landen oder Zurückkehren ist, anzuzeigen, wobei sich das unbemannte Luftfahrzeug (20) in einem Zielgebiet, das durch Gebietsinformationen angezeigt wird, befindet, und wobei die Gebietsinformationen verwendet werden, um ein Gebiet, in dem das unbemannte Luftfahrzeug (20) verwaltet und gesteuert wird, anzuzeigen;
Durchführen (207, 307), durch das unbemannte Luftfahrzeug (20), des entsprechenden Betriebs basierend auf den Verwaltungs- und Steuerinformationen,
wobei
das Empfangen, durch das unbemannte Luftfahrzeug (20), von Verwaltungs- und Steuerinformationen, die von einer Zugangsnetzvorrichtung (101) rundgesendet werden, umfasst:
Empfangen, durch das unbemannte Luftfahrzeug (20), einer Systemnachricht, die von der Zugangsnetzwerkvorrichtung (101) rundgesendet wird, wobei die Systemnachricht die Verwaltungs- und Steuerinformationen umfasst; und
Erhalten, durch das unbemannte Luftfahrzeug (20), der Verwaltungs- und Steuerinformationen aus der Systemnachricht; und
wobei das Verfahren ferner umfasst:
Empfangen, durch das unbemannte Luftfahrzeug (20), einer Paging-Nachricht, die von der Zugangsnetzwerkvorrichtung (101) rundgesendet wird, wobei die Paging-Nachricht Anzeigeinformationen umfasst; und
das Erhalten, durch das unbemannte Luftfahrzeug (20), der Verwaltungs- und Steuerinformationen aus der Systemnachricht umfasst:
Erhalten, durch das unbemannte Luftfahrzeug (20), der Verwaltungs- und Steuerinformationen aus der Systemnachricht basierend auf den Anzeigeinformationen, wobei die Systemnachricht einen ersten Systeminformationsblock und einen zweiten Systeminformationsblock umfasst; und
der erste Systeminformationsblock Planungsinformationen der Verwaltungs- und Steuerinformationen umfasst; und
der zweite Systeminformationsblock die Verwaltungs- und Steuerinformationen umfasst.

2. Verfahren nach Anspruch 1, wobei die Verwaltungs- und Steuerinformationen eine Konfigurationsrichtlinie einer Zugangsbeschränkung umfassen, und die Konfigurationsrichtlinie Attributinformationen eines Gebiets, in dem der Zugang des unbemannten Luftfahrzeugs (20) beschränkt ist, anzeigt; und das Verfahren ferner umfasst: Bestimmen, durch das unbemannte Luftfahrzeug (20), einer Kandidatenzelle basierend auf der Konfigurationsrichtlinie während einer Zellübergabe oder Zellneuauswahl.

3. Verfahren nach Anspruch 1 oder 2, wobei die Verwaltungs- und Steuerinformationen ferner eine Verwaltungs- und Steuerart, Verwaltungs- und Steuerzeitinformationen oder Alarminformationen umfassen, wobei
die Verwaltungs- und Steuerart einen Grund für das Durchführen der Verwaltung und Steuerung an dem unbemannten Luftfahrzeug (20) anzeigt;
die Verwaltungs- und Steuerzeitinformation eine Zeitspanne anzeigen, in der das unbemannte Luftfahrzeug (20) verwaltet und gesteuert wird; und
die Alarminformationen einen Inhalt eines Alarms oder einer Warnung anzeigen.

4. Verfahren für die Überwachung eines unbemannten Luftfahrzeugs, das umfasst:
Empfangen (204, 304), durch eine Zugangsnetzwerkvorrichtung (101), einer Rundsendeanforderung von einem Kernnetzwerkelement (102), wobei die Rundsendeanforderung dritte Verwaltungs- und Steuerinformationen und vierte Verwaltungs- und Steuerinformationen zum Verwalten und Steuern eines unbemannten Luftfahrzeugs (20) umfasst, und die vierten Verwaltungs- und Steuerinformationen Gebietsinformationen umfassen, wobei die dritten Verwaltungs- und Steuerinformationen eine Betriebsanweisung einschließen, wobei die Betriebsanweisung verwendet wird, um einen Betrieb, der durch das unbemannte Luftfahrzeug (20) durchgeführt werden muss, der Schweben, Landen oder Zurückkehren ist, anzuzeigen, und wobei die Gebietsinformationen verwendet werden, um ein Gebiet, in dem das unbemannte Luftfahrzeug (20) verwaltet und gesteuert wird, anzuzeigen;
Bestimmen (205, 305), durch die Zugangsnetzwerkvorrichtung (101) basierend auf den Gebietsinformationen, eines Zielgebiets zum Rundsenden; und
Rundsenden (206, 306), durch die Zugangsnetzwerkvorrichtung (101), der dritten Verwaltungs- und Steuerinformationen an ein unbemanntes Luftfahrzeug (20) in dem Zielgebiet, wobei die dritten Verwaltungs- und Steuerinformationen dem unbemannten Luftfahrzeug (20) anzeigen, den entsprechenden Betrieb durchzuführen,
wobei
das Rundsenden (206, 306), durch die Zugangsnetzwerkvorrichtung (101), der dritten Verwaltungs- und Steuerinformationen an ein unbemanntes Luftfahrzeug (20) in dem Zielgebiet umfasst:
Rundsenden, durch die Zugangsnetzwerkvorrichtung (101), einer Systemnachricht an das unbemannte Luftfahrzeug (20) in dem Zielgebiet, wobei die Systemnachricht die dritten Verwaltungs- und Steuerinformationen umfasst; und
wobei das Verfahren ferner umfasst:
Rundsenden, durch die Zugangsnetzwerkvorrichtung (101), einer Paging-Nachricht an das unbemannte Luftfahrzeug (20) in dem Zielgebiet, wobei die Paging-Nachricht Anzeigeinformationen umfasst, und die Anzeigeinformationen dem unbemannten Luftfahrzeug (20) anzeigen, die dritten Verwaltungs- und Steuerinformationen zu erhalten, wobei die Systemnachricht einen ersten Systeminformationsblock und einen zweiten Systeminformationsblock umfasst; und
der erste Systeminformationsblock Planungsinformationen der Verwaltungs- und Steuerinformationen umfasst; und
der zweite Systeminformationsblock die Verwaltungs- und Steuerinformationen umfasst.

5. Verfahren nach Anspruch 4, das ferner umfasst:
Senden (203, 303), durch das Kernnetzwerkelement (102), der Rundsendeanforderung.

6. System für die Überwachung eines unbemannten Luftfahrzeugs, das umfasst: ein Kernnetzwerkelement (102) und eine Zugangsnetzwerkvorrichtung (101), die konfiguriert ist, um mit dem Kernnetzwerkelement (102) zu kommunizieren, wobei die Zugangsnetzwerkvorrichtung (101) konfiguriert ist, um das Verfahren nach Anspruch 4 durchzuführen.

7. Computerlesbares Speicherungsmedium, wobei das computerlesbare Speicherungsmedium eine oder mehrere computerausführbare Anweisungen speichert; und wenn die computerausführbare Anweisung durch einen Prozessor ausgeführt wird, der in einem unbemannten Luftfahrzeug umfasst ist, das unbemannte Luftfahrzeug in die Lage versetzt wird, um das Verfahren nach einem der Ansprüche 1 bis 3 durchzuführen.

8. Unbemanntes Luftfahrzeug (20), das umfasst:
einen Speicher, der konfiguriert ist, um computerausführbare Anweisungen zu speichern; und
mindestens einen Prozessor, der konfiguriert ist, um die gespeicherten Anweisungen auszuführen, um das unbemannte Luftfahrzeug (20) zu veranlassen, das Verfahren nach einem der Ansprüche 1 bis 3 durchzuführen.

9. Zugangsnetzwerkvorrichtung (101), die umfasst:
einen Speicher, der konfiguriert ist, um computerausführbare Anweisungen zu speichern; und
mindestens einen Prozessor, der konfiguriert ist, um die gespeicherten Anweisungen auszuführen, um die Zugangsnetzwerkvorrichtung (101) zu veranlassen, das Verfahren nach Anspruch 4 durchzuführen.

## Revendications

1. Procédé de supervision de véhicule aérien sans pilote, comprenant :
la réception (206, 306), par un véhicule aérien sans pilote (20), d'informations de gestion et de commande diffusées à partir d'un dispositif de réseau d'accès (101), dans lequel les informations de gestion et de commande comportent une instruction d'opération, où l'instruction d'opération est utilisée pour indiquer une opération qui doit être réalisée par le véhicule aérien sans pilote (20), étant le vol stationnaire, l'atterrissage ou le retour, dans lequel le véhicule aérien sans pilote (20) se trouve dans une zone cible indiquée par des informations de zone, et dans lequel les informations de zone sont utilisées pour indiquer une zone dans laquelle le véhicule aérien sans pilote (20) est géré et commandé ;
la réalisation (207, 307), par le véhicule aérien sans pilote (20), de l'opération correspondante sur la base des informations de gestion et de commande,
dans lequel
la réception, par le véhicule aérien sans pilote (20), d'informations de gestion et de commande diffusées à partir d'un dispositif de réseau d'accès (101) comprend :
la réception, par le véhicule aérien sans pilote (20), d'un message système diffusé à partir du dispositif de réseau d'accès (101), dans lequel le message système comprend les informations de gestion et de commande ; et
l'obtention, par le véhicule aérien sans pilote (20), des informations de gestion et de commande à partir du message système ; et
le procédé comprend en outre :
la réception, par le véhicule aérien sans pilote (20), d'un message de radiomessagerie diffusé à partir du dispositif de réseau d'accès (101), dans lequel le message de radiomessagerie comprend des informations d'indication ; et
l'obtention, par le véhicule aérien sans pilote (20), des informations de gestion et de commande à partir du message système comprend :
l'obtention, par le véhicule aérien sans pilote (20), des informations de gestion et de commande à partir du message système sur la base des informations d'indication, dans lequel le message système comprend un premier bloc d'informations système et un second bloc d'informations système ; et
le premier bloc d'informations système comprend des informations de programmation des informations de gestion et de commande ; et
le second bloc d'informations système comprend les informations de gestion et de commande.

2. Procédé selon la revendication 1, dans lequel les informations de gestion et de commande comprennent une politique de configuration de restriction d'accès, et la politique de configuration indique des informations d'attribut d'une zone dans laquelle l'accès du véhicule aérien sans pilote (20) est restreint ; et le procédé comprend en outre :
la détermination, par le véhicule aérien sans pilote (20), d'une cellule candidate sur la base de la politique de configuration pendant le transfert de cellule ou la resélection de cellule.

3. Procédé selon la revendication 1 ou 2, dans lequel les informations de gestion et de commande comprennent en outre un type de gestion et de commande, des informations temporelles de gestion et de commande ou des informations d'alarme, dans lequel
le type de gestion et de commande indique une raison permettant de réaliser la gestion et la commande sur le véhicule aérien sans pilote (20) ;
les informations temporelles de gestion et de commande indiquent une période de temps pendant laquelle le véhicule aérien sans pilote (20) est géré et commandé ; et
les informations d'alarme indiquent un contenu d'une alerte ou d'un avertissement.

4. Procédé de supervision de véhicule aérien sans pilote, comprenant :
la réception (204, 304), par un dispositif de réseau d'accès (101), d'une demande de diffusion à partir d'un élément de réseau central (102), dans lequel la demande de diffusion comprend de troisièmes informations de gestion et de commande et de quatrièmes informations de gestion et de commande permettant de gérer et commander un véhicule aérien sans pilote (20), et les quatrièmes informations de gestion et de commande comprennent des informations de zone, dans lequel les troisièmes informations de gestion et de commande comportent une instruction d'opération, où l'instruction d'opération est utilisée pour indiquer une opération qui doit être réalisée par le véhicule aérien sans pilote (20), étant le vol stationnaire, l'atterrissage ou le retour, et dans lequel les informations de zone sont utilisées pour indiquer une zone dans laquelle le véhicule aérien sans pilote (20) est géré et commandé ;
la détermination (205, 305), par le dispositif de réseau d'accès (101) sur la base des informations de zone, d'une zone cible pour la diffusion ; et
la diffusion (206, 306), par le dispositif de réseau d'accès (101), des troisièmes informations de gestion et de commande à un véhicule aérien sans pilote (20) dans la zone cible, dans lequel les troisièmes informations de gestion et de commande indiquent au véhicule aérien sans pilote (20) de réaliser l'opération correspondante,
dans lequel
la diffusion (206, 306), par le dispositif de réseau d'accès (101), des troisièmes informations de gestion et de commande à un véhicule aérien sans pilote (20) dans la zone cible comprend :
la diffusion, par le dispositif de réseau d'accès (101), d'un message système au véhicule aérien sans pilote (20) dans la zone cible, dans lequel le message système comprend les troisièmes informations de gestion et de commande ; et
le procédé comprend en outre :
la diffusion, par le dispositif de réseau d'accès (101), d'un message de radiomessagerie au véhicule aérien sans pilote (20) dans la zone cible, dans lequel le message de radiomessagerie comprend des informations d'indication, et les informations d'indication indiquent au véhicule aérien sans pilote (20) d'obtenir les troisièmes informations de gestion et de commande,
dans lequel le message système comprend un premier bloc d'informations système et un second bloc d'informations système ; et
le premier bloc d'informations système comprend des informations de programmation des informations de gestion et de commande ; et
le second bloc d'informations système comprend les informations de gestion et de commande.

5. Procédé selon la revendication 4, comprenant en outre :
l'envoi (203, 303), par l'élément de réseau central (102), de la demande de diffusion.

6. Système de supervision de véhicule aérien sans pilote, comprenant : un élément de réseau central (102) et un dispositif de réseau d'accès (101) qui est configuré pour communiquer avec l'élément de réseau central (102), dans lequel le dispositif de réseau d'accès (101) est configuré pour réaliser le procédé selon la revendication 4.

7. Support de stockage lisible par ordinateur, dans lequel le support de stockage lisible par ordinateur stocke une ou plusieurs instructions exécutables par ordinateur ; et lorsque l'instruction exécutable par ordinateur est exécutée par un processeur compris dans un véhicule aérien sans pilote, le véhicule aérien sans pilote est activé pour réaliser le procédé selon l'une quelconque des revendications 1 à 3.

8. Véhicule aérien sans pilote (20), comprenant :
une mémoire, configurée pour stocker des instructions exécutables par ordinateur ; et
au moins un processeur, configuré pour exécuter les instructions stockées, pour amener le véhicule aérien sans pilote (20) à réaliser le procédé selon l'une quelconque des revendications 1 à 3.

9. Dispositif de réseau d'accès (101), comprenant :
une mémoire, configurée pour stocker des instructions exécutables par ordinateur ; et
au moins un processeur, configuré pour exécuter les instructions stockées, pour amener le dispositif de réseau d'accès (101) à réaliser le procédé selon la revendication 4.
